# EUROPEAN PATENT APPLICATION

(11) **EP 2 280 372 A1**
(43) Date of publication of application: **02.02.2011**
(21) Application number: 09009934.2
(22) Date of filing: 31.07.2009
(51) Int. Cl.: G06Q 10/00

(54) **Computer-implemented method, system, and computer program product for connecting contract management and claim management**

(71) Applicant: ACCENTURE Global Services GmbH, 8200 Schaffhausen (CH)
(72) Inventor: Lichtenthaler, Matthias, 80807 München (DE)
(74) Representative: Müller-Boré & Partner Patentanwälte

(57) **Abstract**

The description is directed to a computer-implemented method, system, and computer program product for connecting contract management and claim management. In one aspect, the computer-implemented method for connecting contract management and claim management may comprise:
annotating target constraints, to be fulfilled by at least one contract, with machine-readable and/or machine-processible metadata;
providing an electronic target form based on the annotated target constraints of the contract;
receiving through an interface at least one actual data value corresponding to at least one of the target constraints in the electronic target constraint form;
determining using a processor whether the at least one actual data value matches the at least one target constraint; and
if a mismatch between the at least one actual data value and the at least one target constraint is determined, then providing an electronic decision form based on the mismatch.

## Description

### Technical Field

The description is directed generally to data and information management and in particular to a computer-implemented method, computer system, and computer program product for connecting contract management and claim management.

### Background

At present, claim capturing from contract data (e.g. legal contracts for a planned construction) is only partially processed automatically. Additionally, processing of said data is only partially executed with standardized processing tools. Said processing is necessary however, in order to support a user in making decisions regarding failure with respect to one or more claims formulated in the contract. Prior to decision-making, necessary information and/or data need to be gathered from various data sources. The data sources may be located on different systems and/or servers hosting different services. Said data and/or information gathering may be a time-consuming and inefficient process. Furthermore, it is often the case that contracts only exist in an unstructured electronic target constraint form or even only in paper format. Therefore, claim capturing and processing is commonly performed manually and not linked to relevant data and/or information (e.g. clauses) in a contract.

Claims to be fulfilled or met by a contract are also referred to hereinafter as target constraints, wherein one clause of a contract is associated with at least one target constraint.

Accordingly, there is a need to provide computer-aided systems and methods allowing for a quick summary of relevant information related to at least one contract as a basis for decision-making through an (intelligent) software agent. Furthermore, there is a need to avoid manual processing of individual contracts. Rather, a system and method should be provided to process a large amount of data and/or information from a variety of contracts in a consistent manner. In fact, at present it is often not possible to process large amounts of data and/or information relating to contracts, particularly for one or more projects.

### Summary

According to one general aspect, a computer-implemented method for connecting contract management and claim management is provided. The method may comprise:
annotating target constraints, to be fulfilled by at least one contract, with machine-readable and/or machine-processible metadata;
providing an electronic target constraint form based on the annotated target constraints of the contract;
receiving through an interface at least one actual data value for at least one of the target constraints in the electronic target constraint form;
determining, using a processor, whether the at least one actual data value matches the at least one target constraint; and
if a mismatch between the at least one actual data value and the at least one target constraint is determined, then providing a electronic decision form based on the mismatch.

Advantageously, data will be provided in a machine-readable and/or machine processible manner, so that it is possible for a user to efficiently make decisions based on said data and/or information. Particularly, a quick and easy overview regarding an entire claim basis (or target constraint basis) of a plurality of contracts, a status of processing regarding each of the contracts, etc. is possible. Furthermore, the provided capturing, storing and processing of data, information, and/or target constraints of contracts substantially optimizes decision-making and processing according to said data and/or information; it also saves costs and time. Without the computer-implemented method according to the present application, such an approach is not possible.

The contract and/or its target constraints may be annotated and/or enhanced with metadata using a parser. For example, the contract may be annotated manually or semi-manually and/or by use of a processor with XML-based data, e.g. marking target constraints, marking whether a target constraint is a soft constraint or a hard constraint, marking additional information of the contract (e.g. responsible persons), deadlines and/or time schedules for target constraints, and/or relating one or more functions which need to be processed in association with target constraints to said target constraints.

The target constraint may be a hard constraint or a soft constraint. If the target constraint is a hard constraint, a corresponding actual data value may be a measurable parameter. In other words, a concrete value may be expected and the actual value is compared to the expected one. An example of a hard constraint may be that a distance between a radiator and a wall must be 4 cm, which is formulated as a target constraint. However, if the target constraint is a soft constraint e.g. that the color of a wall should be white, an actual data value may be related to an uncertainty. An uncertainty may be expressed by a probability. According to one example, the actual value for this constraint may be formulated that e.g. the wall is white for 80 percent. Additionally or alternatively, the actual value may be received by selecting one out of a plurality of possible answers, particularly, a user may chose from a list of predefined values, which may be implemented in a drop down menu that the wall is "almost white", "less white", or "hardly white". This may be achieved by allowing to check one or more check boxes in an interface.

If the target constraint is a soft constraint, (always) a mismatch may be determined such that, e.g. a user receiving the electronic decision form can determine whether the computed uncertainty may be allowable or not. In one example, a reference regarding a decision on the soft target constraint may be computed in the system. For example, the user may be supported in making his decision regarding the soft constraint.

The electronic decision form may be an input to a further computation such as the generation of a report based on the determined mismatches. Hence the electronic decision form may be data in cache memory and/or in a specific electronic file format. Furthermore, the electronic decision form may be output as a PDF, and/or sent by email to a user.

Matching between contract management and claim management is provided. In this manner, these two aspects are integrated through an electronic matching process so that contract management and claim management are integrated in a consistent manner. Consequently, management, control and processing of contracts and their related target constraints becomes more efficient and/or more accurate. Hence, man-machine interaction is improved, because a user is relieved of the mental tasks of matching target constraints to respective clauses in at least one contract and to determine possible deviations and/or mismatching. In fact, performing said tasks manually would not even be possible, in particular because such an integrated system is necessary to deal with the large amount of data and/or information to be managed, controlled and/or processed.

It should be understood that only said target constraints for which a mismatch is determined may be input to the electronic decision form. It may be possible that further target constraints, in particular all target constraints, independent of a possible mismatch, may be input to the electronic decision form. It is also possible that actual data values may be provided with corresponding target constraints. Target constraints for which a mismatch is determined may be distinguished from target constraints for which no mismatch is determined, e.g. by a specific color code, a specific kind of display, etc. Furthermore, the comparison may be evaluated such that a user is provided with cognitive content data supporting him/her in a decision regarding target constraints of a contract.

According to an example, providing an electronic decision form may comprise:
automatically activating at least one action associated with said at least one target constraint.

Said action may comprise generating a PDF related to the mismatch, generating a report to be presented in a graphical environment, sending an email to a user responsible for the corresponding target constraint.

In one exemplary implementation, said matching process may be associated with a workflow which may be (automatically) triggered when decision making is performed. In other words, an action associated with the target constraint may be triggering the workflow. A corresponding user may be then notified, e.g. by email, that a (new) missmatch regarding to the target constraint is captured. The email may comprise a link, which may directed the user to a corresponding contract matching frame.

In case an external party may be integrated and/or involved into said matching process, a specific document container with relevant information and/or documents e.g. regarding the missmatch may be generated and provided to the external party. After the external party may have responded to the information contained in the specific container, the data (including the response) may be captured in a document, e.g. an XML document.

According to an example, determining the mismatch may comprise:
comparing the at least one actual data value with the at least one corresponding target constraint; and
based on the comparison, determining whether a threshold value for said target constraint is exceeded.

There may be at least two types of mismatches:
(1) Matching based on hard facts or hard constraints comprising at least one possible calculation process which may be handled (e.g. by MS Excel) and further processed.
(2) Matching based on soft facts or soft constraints so that the matching process may determine not a clear mismatch but rather one or more corresponding contract clauses from the contract. Such a clause may comprise terms such as "level of quality", even if said level may not be clearly specified, e.g. specified by a probability and/or by a level of uncertainty.

According to an example, providing the electronic decision form may comprise:
sending and displaying, through a user interface, the electronic decision form to a receiver, wherein the electronic decision form comprises a subset of the target constraints for which a mismatch is determined.

Accordingly, the electronic decision form may be sent to another file or system component in the same device and/or to another device through a wired or wireless (local or global) network.

Hence, man-machine interaction is improved because a user is relieved from the mental task of matching target constraints to respective clauses in at least one contract, and from determining possible deviations and/or mismatching. Said tasks would not even be possible manually without such an integrated system, in particular due to the large amount of data and/or information to be managed, controlled and/or processed. Furthermore, by displaying the electronic decision form to a user in a graphical user interface, reports can be generated and displayed to the user. In this way, the user is provided with a quick and clear overview over at least one contract, its target constraints and/or to which extent said target constraints are fulfilled. In other words, the user is provided with cognitive content about the contract and target constraints. Furthermore, data processing of contract data and related target constraints may be more efficient.

It should be understand that the subset may comprise all target constraints.

According to an example, the method may further comprise:
automatically inserting contract negotiation data into the at least one contract such that the contract negotiation data are considered during annotation of the target constraints.

The step of automatically inserting contract negotiation data may be performed before annotating target constraints. Furthermore, said two steps may be performed repeatedly in case the contract is re-considered in a later stage of processing.

According to an example, the method may further comprise:
displaying and managing the target constraints in a graphical user interface.

The graphical user interface may be a dashboard, which is operable to present one or more reports for at least one project. The reports may be generated during contract and claim management from one or more contracts, related target constraints and corresponding actual data values, additional information and/or data regarding the contract, and/or corresponding constructors, which need to fulfill the target constraints.

According to an example, the graphical user interface may comprise one or more levels of granularity for displaying the target constraints and access rights particularly to the one or more levels of granularity according to one or more user profiles.

The levels of granularity may comprise three levels of detail in a dashboard which may be referred to as first, second, and third level, respectively.

According to another general aspect there is provided a computer-program product comprising computer readable instructions, which when loaded and run in a computer and/or computer network, cause the computer and/or the computer network to perform a method as described.

The subject matter described in this specification can be implemented as a method or as a system or using computer program products, tangibly embodied in information carriers, such as a CD-ROM, a DVD-ROM, a semiconductor memory, a signal and/or data stream, and a hard disk. Such computer program products may cause a data processing apparatus to perform one or more operations described in this specification.

According to another general aspect, a computer system for connecting contract management and claim management is provided, the computer system including a contract and claim management system comprising:
an annotator operable to annotate target constraints, to be fulfilled by at least one contract, with machine-readable and/or machine-processible metadata;
a client operable to provide an electronic target constraint form (120) based on the annotated target constraints of the contract; and to receive at least one actual data value for at least one of the target constraints in the electronic target constraint form; and
a determiner operable to determine whether the at least one actual data value matches the at least one target constraint;
if a mismatch between the at least one actual data value and the at least one target constraint is determined, then provide a electronic decision form (160) based on the mismatch.

In other words, the computer system may be operable to:
annotate target constraints, to be fulfilled by at least one contract, with machine-readable and/or machine-processible metadata;
provide an electronic target constraint form based on the annotated target constraints of the contract;
receive at least one actual data value for at least one of the target constraints in the electronic target constraint form;
determine whether the at least one actual data value matches the at least one target constraint; and
if a mismatch between the at least one actual data value and the at least one target constraint is determined, then provide a electronic decision form based on the mismatch.

According to an example, the contract and claim management system may further be operable to:
automatically activate at least one action associated with said at least one target constraint.

According to an example, the contract and claim management system may further be operable to:
compare the at least one actual data value with the at least one corresponding target constraint; and
based on the comparison, determine whether a threshold value for said target constraint is exceeded.

According to an example, the contract and claim management system may further be operable to:
send and display the electronic decision form to a receiver, wherein the electronic decision form comprises a subset of the target constraints for which a mismatch is determined.

According to an example, the contract and claim management system may further be operable to:
automatically insert contract negotiation data into the at least one contract such that the contract negotiation data are considered during annotation of the target constraints.

According to an example, the computer system may further comprise a graphical user interface operable to:
display and manage the target constraints.

According to an example, the graphical user interface may comprise one or more levels of granularity for displaying the target constraints and access rights to the one or more levels of granularity according to one or more user profiles.

It is understood, that the components of the computer system, e.g. the annotator, the client, the determiner, etc. may be implemented in hardware and/or as part of a system architecture. In particular, it is possible that the components may be part of the same architecture and particularly may be implemented within software. It may be possible, that the components are entirely implemented as software, which may be highly connected, where it is not necessary that the single components are implemented individually. In other words, the components may use and/or comprise similar of even the same software structure, routines, classes, libraries, etc.

In addition, the subject matter described in this specification can also be implemented as a system including a processor and a memory coupled to the processor. The memory may encode one or more programs that cause the processor to perform one or more of the method acts described in this specification. Further the subject matter described in this specification can be implemented using various MRI machines.

Details of one or more implementations are set forth in the accompanying exemplary drawings and exemplary description below. Other features will be apparent from the description and drawings, and from the claims.

### Brief Description of the Drawings

Figure 1 shows a block diagram of an exemplary process of contract life cycle management.
Figure 2 shows a block diagram of an exemplary factual connection between contract management and claim management.
Figure 3 shows a block diagram of an exemplary connection of contract management and claim management.
Figures 4A to 4E show a flow diagram of an exemplary process of matching between a contract and claims.
Figure 5 shows a block diagram of an exemplary system architecture of contract life cycle management and claim management.
Figure 6 shows a flow diagram of an exemplary process of a connection between contract management and claim management.
Figure 7 shows a flow diagram of an exemplary process of claim processing.
Figure 8A shows an exemplary design of a dashboard comprising three levels.
Figure 8B shows an exemplary first level of a dashboard.
Figure 8C shows an exemplary second level of a dashboard.
Figure 8D shows an exemplary third level of a dashboard.
Figure 8E shows an exemplary use of a third level of a dashboard.
Figure 8F shows another exemplary use of a third level of a dashboard.
Figure 8G shows yet another exemplary use of a third level of a dashboard.
Figure 8H shows yet another exemplary use of a third level of a dashboard.
Figure 8I shows yet another exemplary use of a third level of a dashboard.
Figure 8J shows yet another exemplary use of a third level of a dashboard.
Figure 8K shows yet another exemplary use of a third level of a dashboard.
Figure 8L shows yet another exemplary use of a third level of a dashboard.
Figure 9 shows an exemplary use case for a dashboard.
Figures 10A and 10B show another exemplary use case for a dashboard.
Figures 11A and 11B show yet another exemplary use case for a dashboard.
Figures 12A, 12B, and 12C show another exemplary use case for a dashboard.
Figure 13 shows examples to model contract management and claim management using a dashboard.
Figures 14A and 14B show exemplary workflows for contract management and claim management using a dashboard and a connected contract management and claim management process.
Figure 15 shows a block diagram of an exemplary computer (network) system.

### Detailed Description

In the following, a detailed description of examples will be given with reference to the drawings. It should be understood that various modifications to the examples may be made. In particular, elements of one example may be combined and used in other examples to form new examples.

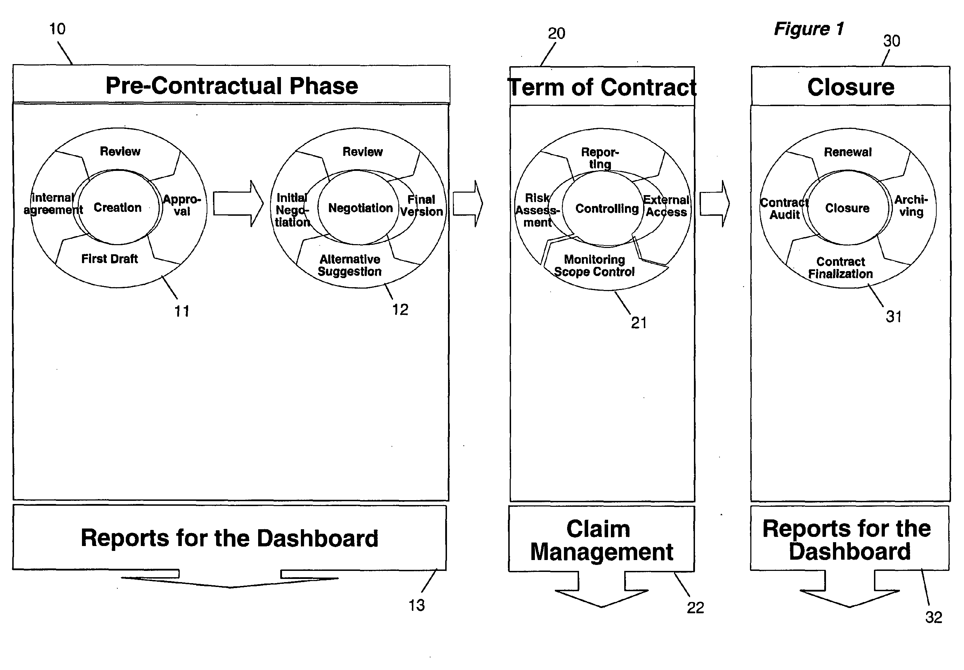

**Figure 1** shows an exemplary overview regarding contract (life cycle) management. Contract management may be divided into three phases 10, 20, 30. In a first phase 10, which may be referred to as a pre-contractual phases, one or more reports regarding at least one contract may be generated. The reports may be presented and further prepared and processed using a graphical reporting tool (or graphical environment or graphical user interface) such as a dashboard 13. The reports for the dashboard may be Excel sheets and/or sheets generated using another reporting tool than Excel. The pre-contractual phase 10 may comprise a creation phase 11 and a negotiation phase 12. The creation phase 11 may be related to an internal process of creating the at least one contract, comprising internal agreement, review, and approval of a first draft for the contract. During the creation phase 11, the contract may be modeled in terms of a computer-readable and processible workflow using a workflow modeling language such as BPEL. A workflow formulated in a workflow modeling language may be executed by a workflow engine. Said workflow engine may be web-based or local. The negotiation phase 12 may relate to contract negotiation based on the first draft established during the creation phase 11. This may be based on a standardized process. The negotiation phase 12 may comprise the steps of an initial negotiation based on the first draft, reviewing the first draft and providing alternate suggestions, which together may be incorporated into a final version.

The final version of the contract established during the negotiation phase 12 of the pre-contractual phase 10 may be an input to the second phase 20. The second phase may be referred to as a term of contract phase. Results of the term of contract phase 20 may be input to a claim management process 22. The claim management process 22 may comprise management and processing of claims or target constraints to be fulfilled or met by the contract. In one example, the target constraints may be constraints (or conditions) formulated in one or more clauses of the contract such that one clause may be associated with at least one target constraint. The target constraints may be annotated or enhanced with machine-readable and machine-processible metadata, e.g. using an annotator. The claim management process 22 is described in further detail below. The term of contract phase 20 may be related to monitoring of the contract and extracted data and/or information such as target constraints. Furthermore, during said phase 20, access to the contract data and/or information is controlled (e.g. public accountants). The term of contract phase 20 may comprise a controlling phase 21. The controlling phase 21 may comprise aspects regarding risk assessment, reporting, monitoring and scope control, and/or management of external access to the final version of the contract received from the pre-contractual phase 10.

Reporting and control data regarding the contract and its target constraints retrieved during the term of contract phase 20 may be input to a third phase 30. The third phase 30 may be referred to as a closure phase. The closure phase 30 may generate and process data and/or information regarding the contract and its target constraints and create reports on said data which may be presented by the dashboard 32. The closure phase 30 may relate to renewal or closure of the contract, gathering of data relating to information which may be used when assessing a further contract, and/or to archiving (e.g. by storing in a database connected with the reporting tool such as the dashboard) including e.g. retention periods regarding the contract. The closure phase 30 may comprise a closing phase 31. The closing phase 31 may comprise contract auditing, contract finalization and/or renewal of the contract, and/or archiving of the contract, its related target constraints, and/or further data and/or information retrieved during the term of contract phase 20.

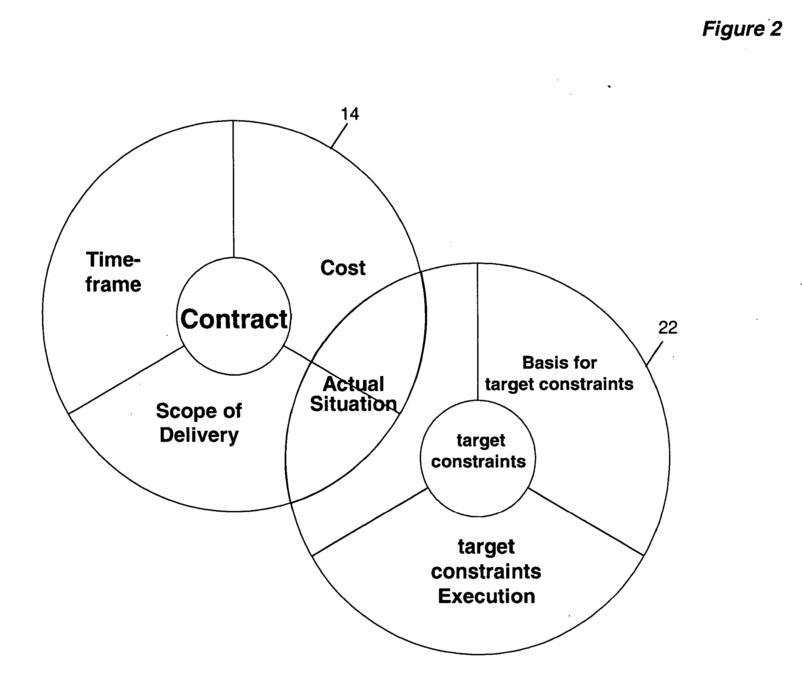

**Figure 2** shows an exemplary (factual) connection between contract management 14 and claim management 22. Contract management 14 may comprise aspects regarding a time frame for a contract, costs related to the contract, and/or a scope of delivery of the contract. The claim management 22 may comprise an actual situation of the contract, a basis for target constraints, and/or execution regarding the target constraints of the contract. As shown in Fig. 2, an actual situation of the contract (e.g. which target constraints are fulfilled and which are open or not fulfilled according to the contract), present during claim management 14, may overlap with both the costs regarding the contract as well as its scope of delivery.

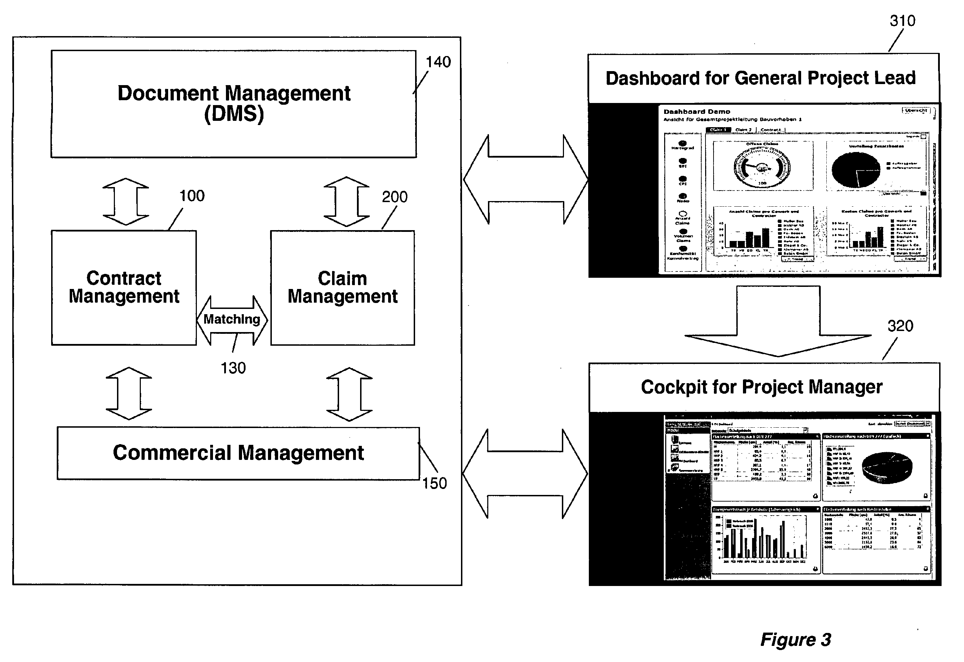

**Figure 3** shows an overview of an exemplary connection between contract management 100 and claim management 200 using a computer system for integrating and automatically processing these two aspects of contracts and their related data and/or information comprising target constraints. Furthermore, computational results from the computer system for integrating contract management 100 and claim management 200 may be presented to a user, e.g. in terms of reports, in different levels of detail through a graphical user interface or graphical environment, e.g. in a dashboard.

In one implementation, the contract management 100 and the claim management 200 may interact with document management (DMS) 140 and/or commercial management 150. The management components 100, 140, 150, 200 may be systems or modules of a possibly distributed computer system which may communicate and/or exchange data in a communication network. Therefore, said components are alternatively referred to as management or management module.

The document management module 140 may provide a search functionality to search in document data (e.g. data relating to contracts), wherein the search functionality may be easy to use. The document management module 140 may provide fast and efficient access to (possibly) relevant documents stored in association with the document management module 140, e.g. in a database and/or a repository associated with said module 140. Additionally, the document management module 140 may provide a repository for storing in a centralized manner a plurality of documents relating to a plurality of contracts, projects (e.g. construction projects), orders (e.g. construction orders), and/or further related files (e.g. construction files). Furthermore, the document management module 140 may provide means for communicating and/or collaborating with other modules in the system.

The commercial management module 150 may provide functionality regarding management and/or controlling of commercial aspects of contracts, projects, orders, and/or their related files (e.g. associated data and/or information such as claims or target constraints) comprising time and planning management of said data. Furthermore, the commercial management module 150 may provide means for communicating and/or collaborating with other modules in the system.

The contract management module 100 may provide functionality to create contracts in an electronic target constraint form comprising negotiations and finalization of the contracts. Additionally, the contract management module 100 may provide means for monitoring and/or controlling contract creation. In other words, the contract management module 100 may comprises functionality for drafting at least one contract, negotiating at least one target constraint for the at least one contract, and/or controlling conclusion of the at least one contract.

The claim management module 200 may provide functionality to capture and/or extract claims(also referred to herein as target constraints) from contracts created in the contract management module 100. Additionally, the claim management module 200 may provide functionality to evaluate contracts and/or their related target constraints, to clarify accountability of contracts and/or different target constraints addressed in the contracts, and/or to execute contracts with regard to their target constraints. Evaluation, clarification, and execution of contracts and/or related target constraints may be performed using a workflow engine in case the contracts are modeled in terms of a workflow. In other words, the claim management module 200 may comprise functionality for acquiring target constraints, evaluating and clarifying the target constraints, and/or executing the target constraints.

The contract management module 100 and the claim management module 200 may be related to each other through a matching module 130 such that data (e.g. contract clauses) of contracts created in the contract management module 100 can be matched to their corresponding target constraints extracted from the contracts in the claim management module 200.

The interaction, integration, and matching processes of contract management 100 and claim management 200 are described in further detail below.

Outcomes from the computations in the contract management module 100 and the claim management module 200 may be present in terms of reports in different levels of detail (or different granularity levels) 310, 320 in a graphical environment or graphical user interface such as a dashboard. The dashboard and its functionalities are described in further detail below.

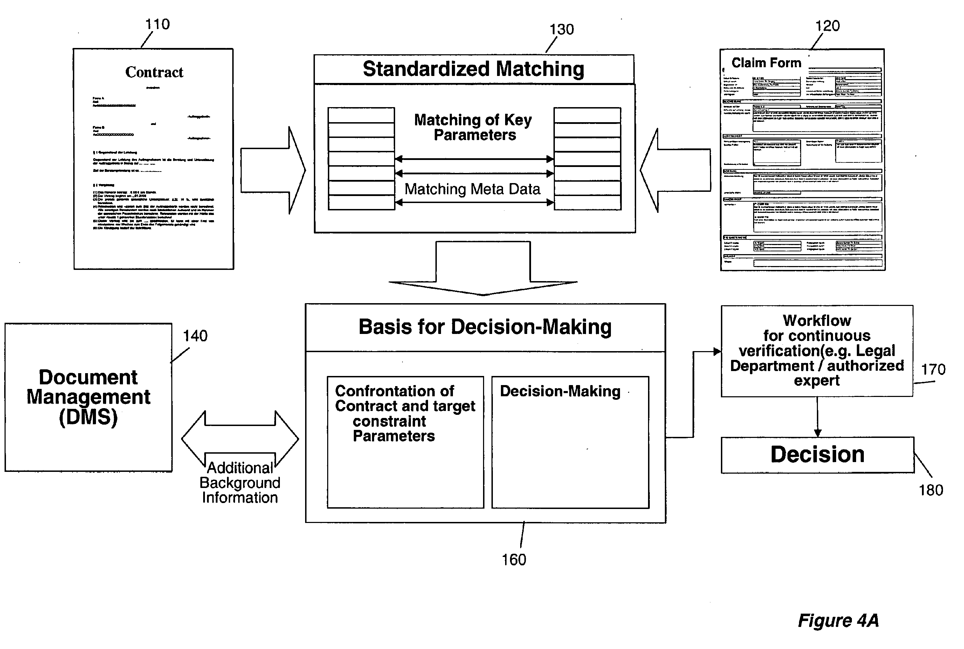

**Figure 4A** shows a flow diagram of an exemplary matching 130 between contract management 100 and claim management 200 such that said two modules are integrated through a matching process 130; in this way, contract management 100 and claim management 200 are integrated in a consistent manner. Consequently, management, control and processing of contracts and their related target constraints becomes more efficient, more accurate. Hence, man-machine interaction is improved, because a user is relieved from the mental task of matching target constraints to respective clauses in at least one contract and to determine possible deviations and/or mismatching. Said tasks would be in fact even not possible manually without such an integrated system, in particular due to the large amount of data and/or information to be managed, controlled and/or processed.

In one example, a contract 110 is initially available either in paper form or in electronic target constraint form. The contract 110 is than parsed and enhanced and/or annotated with metadata, e.g. using a metadata enhancer. As an outcome to said process, the contract is then available in a structured and/or semi-structured form and annotated with metadata such that the contract is machine-readable and/or processible in a computer or computer system. In one exemplary implementation, target constraints to be fulfilled by the contract and which may be formulated with one or more clauses of the contract may be enhanced or annotated with metadata such that the target constraint can be further processed during claim management 200.

After the contract 110 is enriched with metadata, an electronic target constraint form 120 (e.g. a claim form) is created for the contract based on the metadata. The electronic target constraint form 120 can be automatically created by processing the metadata with regard to the target constraints, which need to be fulfilled in order to perform or fulfill the contract 110. The target constraints may be related to hard constraints and/or soft constraints. Hard constraints may comprise predefined parameters, which must be observed, such as predefined deadlines of a time schedule defined in the contract, etc. Hard constraints may therefore be implemented by fixed values and/or value ranges (e.g. (finite) domains). Soft constraints comprise subjective components and/or parameters which need to be fulfilled by the contract, such as measures of quality. Soft constraints may be implemented by values and/or value rangers associated with a level of uncertainty or expressed in terms of probability, e.g. (finite) domains with uncertainty.

The electronic target constraint form may be then filled in with actual data values for one or more of the target constraints, e.g. during survey or inspection of a construction site.

During a matching process 130 between the annotated contract 110 and the electronic target constraint form, in particular between the target constraints of the contract 110 and the actual data values relating to at least some of the target constraints, it is automatically determined whether the actual data values meet the (hard and/or soft) constraints formulated in the contract 110 and considered in the electronic target constraint form 120. In other words, it is determined whether the actual data values meet the related target constraints or not. Furthermore, the matching process 130 may determine a degree of deviation of the actual data value from the target constraint. In case a mismatch and/or a certain degree of deviation is determined during the matching process 130, the result of the matching process 130 can be presented in terms of a electronic decision form 160, possibly comprising a comparison between one or more target constraints of the contract 110 and one or more related actual data values. For example, the electronic decision form 160 comprises a comparison between the target constraints of the contract 110 and the actual data values in the electronic target constraint form 120 including mismatches such as discrepancies, possible tolerances for one or more target constraints and/or possible relevant related (contract) clauses in the contract 110. Hence, the electronic decision form 160 generated by the matching process 130 comparing the target constraints of the contract 110 with corresponding actual data values in the electronic target constraint form 120, only comprises data related to said constraints (and no internals such as the volume and/or involved parties of the contract 110). Therefore, no additional access rights to the data are required if the electronic decision form 160 is sent to an expert as a basis for making a decision.

To generate the electronic decision form 160, the system may interact with the document management module 140 to retrieve additional background information regarding the target constraints of the contract 110.

After the electronic decision form 160 is generated, a decision may be made directly based on the comparison between the target constraints and the corresponding values. In addition or alternatively, the electronic decision form 160 or at least a part of the electronic decision form 160 initializes a workflow 170 for further examination of the non-met target constraints. This workflow 170 may be initiated by the generation of the electronic decision form 1670. In addition or alternatively, continuous verification of the target constraints and related actual data values may be carried out e.g. by a legal department and/or authorized experts. Based on said further verification 170, a decision 180 may be made (e.g. an agreement between the involved parties with regard to the mismatches, a settlement, an arbitration proceeding, etc.) based on the mismatches determined in the electronic decision form 160 between the target constraints and the corresponding actual data values received in the electronic target constraint form 120 of the contract 110.

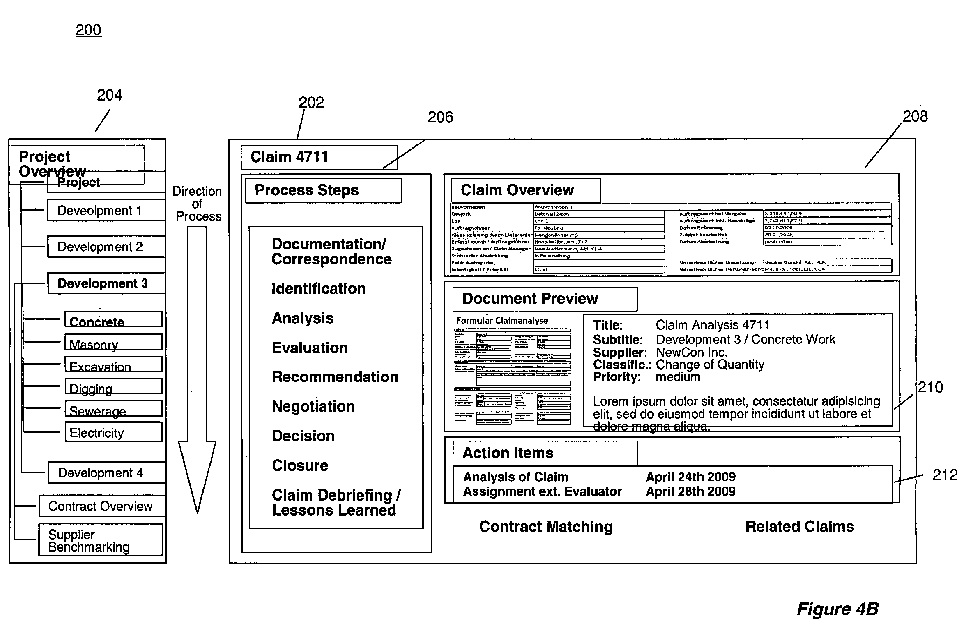

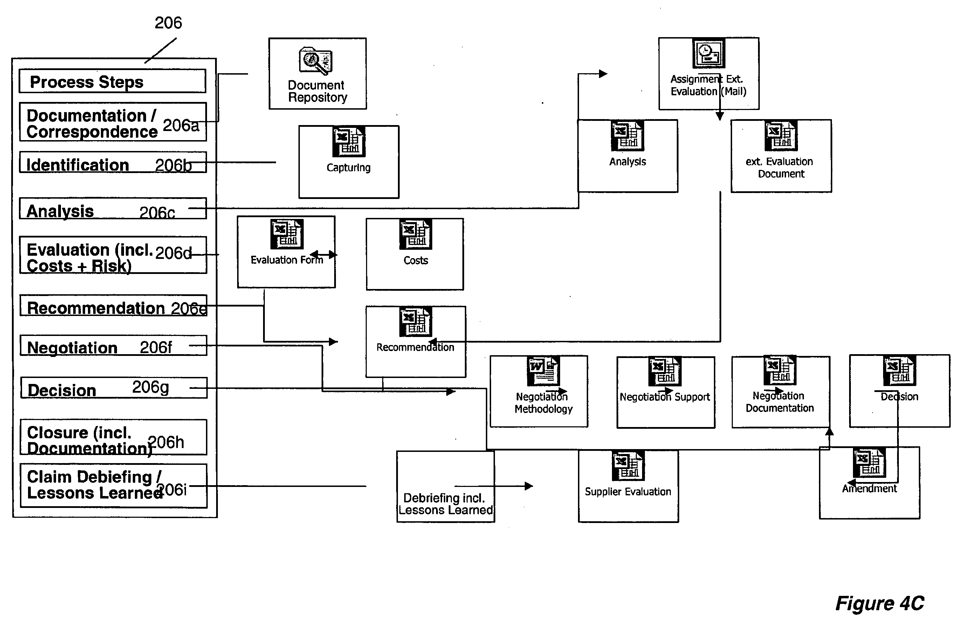

**Figure 4B** shows an exemplary claim management 200 for a target constraint 202. According to one or more steps defined in a project overview 204 (e.g. comprising the steps as shown in the project overview 204 of Fig. 4B) the target constraint 202 is processed according to its associated process steps 206. The processing steps are described below with reference to Fig. 4C. In association with the target constraint, a user may be provided (e.g. by displaying in a dashboard) an overview 208 of the target constraint 202, a document preview 210 of the corresponding claim form 120 and the related contract 110, and/or action items 212 which are related to the target constraint 202.

Figure 4C shows exemplary process steps 206 for processing the target constraint 202 as shown in Fig. 4B. For example, the process steps 206, may include one or more of the following steps applicable to the target constraint:
- documentation/correspondence206a to document the target constraint for example in relation to other target constraints;
- identification 206b for providing a unique identifier to the target constraint 202;
- analysis 206c to analyze the target constraint 202, e.g. by assigning a corresponding email to the target constraint and/or to evaluate it;
- evaluation 206d to evaluate the corresponding claim form 120 including the costs and/or risks for the target constraint 202;
- recommendation 206e to specify what is recommended by the target constraint 202;
- negotiation 206f to relate different negotiations (e.g. comprising a methodology, support, and/or documentation) to the target constraint 202;
- decision 206g relating possible decision making processes to the target constraint 202 with respect to the negotiations 206f;
- closure 206h relating to when the negotiations and/or decision making regarding the target constraint 202 is terminated including a documentation of the closure; and/or
- claim debating/lessons learned 206i relating to a summary on what has been learned from the previous processes of formulating and executing the target constraint 202.

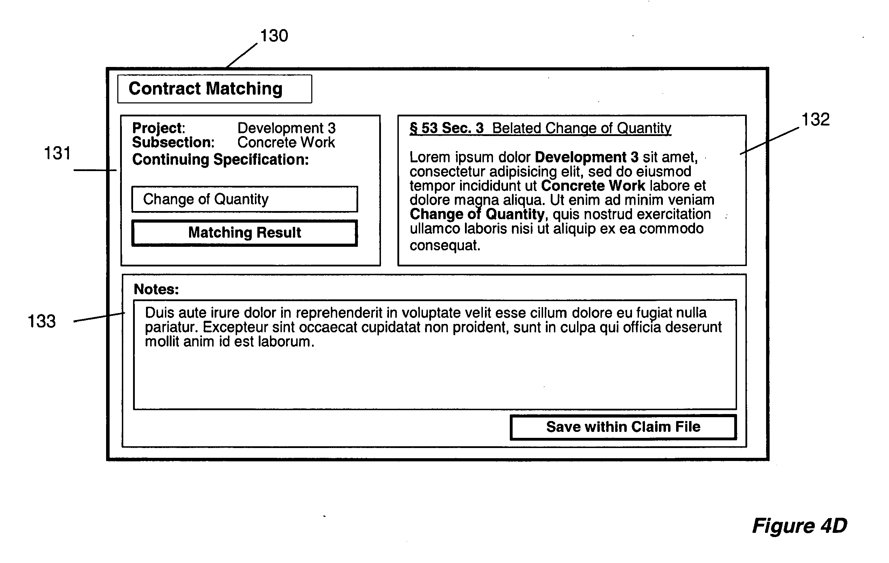

**Figure 4D** shows an example of the contract matching process 130. In the shown screenshot, which may relate to a possible GUI provided in a dashboard to a user, the project 131 to which the contract relates, and/or a specific paragraph 132 of the contract is displayed. The paragraph 132 may comprise one or more target constraints which is considered during the matching process. Furthermore, the user may add a note 133 to the considered contract clause 132.

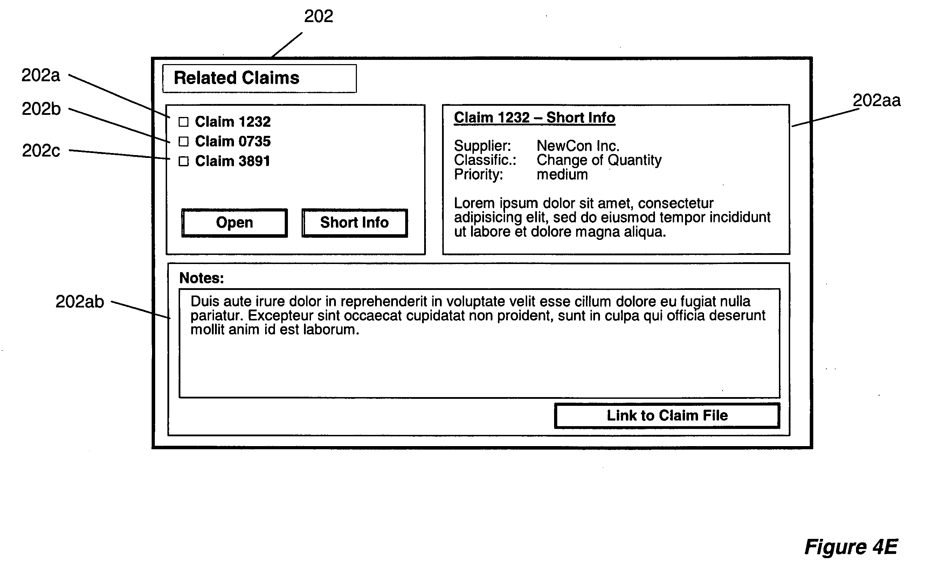

**Figure 4E** show an example screenshot of target constraints 202 relating to the contract clause 132 of the contract matching process 130 shown in Fig. 4D. The exemplary GUI may be displayed to a user in a dashboard. For example, the contract clause 132 may specify three target constraints 202a, 202b, and 202c. one of the target constraints 202a may be selected and a short list of information 202aa is provided and displayed to the user. Furthermore, the user may add a note 202ab to the selected target constraint 202a of the contract clause 132 in an area of the displayed window.

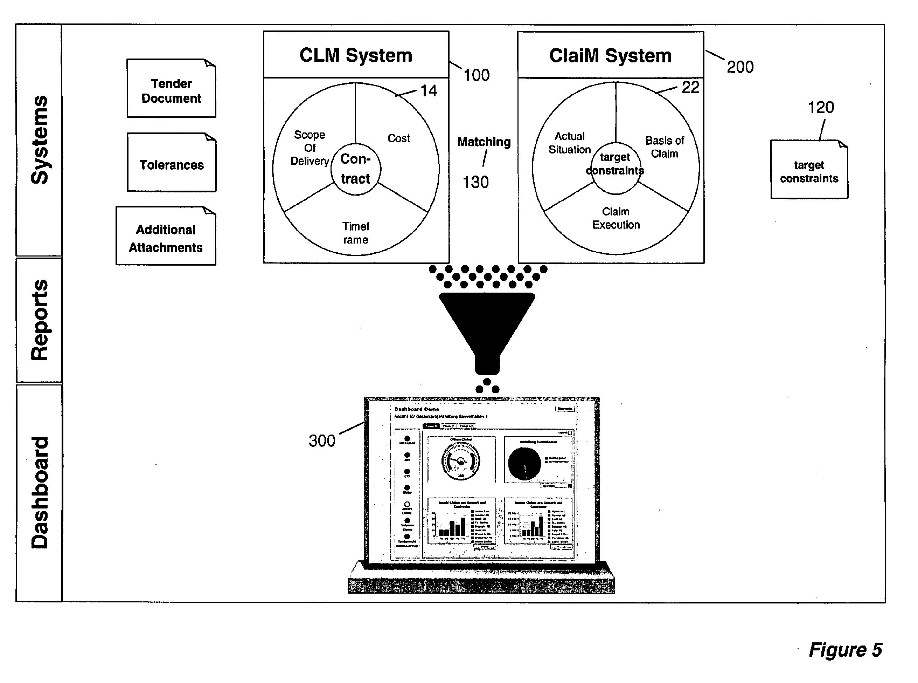

**Figure 5** shows a block diagram of an exemplary system architecture for implementing a method according to Fig. 4A. The contract management module 100 implementing aspects of contract management 14, as described with reference to Fig. 2, and the claim management module 200 implementing aspects of claim management 22, as described with reference to Fig. 2, are integrated through the matching module 130 and its related process. The claim management module 200 may operate based on intelligent forms, e.g. electronic target constraint forms 120 comprising forms to be filled in or completed with actual data values for target constraints, extracted metadata enhancement, and/or annotation of at least one contract 110. The contract management module 100 may operate on with metadata annotated contracts 110, tender documents, tolerances, and/or additional attachments relating to the contract and/or its target constraints formulated within one or more clauses of the contract.

Results of a matching process 130 between a contract 110 and a related electronic target constraint form comprising one or more actual data values related to one or more target constraints of the contract 110, may be one or more of the following: electronic decision forms 160, and/or further aggregations and/or processing of the contract 110 and/or its target constraints, matching between target constraints and corresponding actual data values, and/or further reports; the results may be presented in a graphical environment such as a dashboard 300. The dashboard may comprise a structured (graphical) illustration of reports, analysis and/or analyzing tools for analyzing reports, aggregation and/or drill-down functionality, and/or initialization of one or more workflows and/or single action items of a workflow related to a contract 110, target constraints of a contract, corresponding actual data values in electronic target constraint forms 120, electronic decision forms 160 and/or further reports generated from said data and/or information.

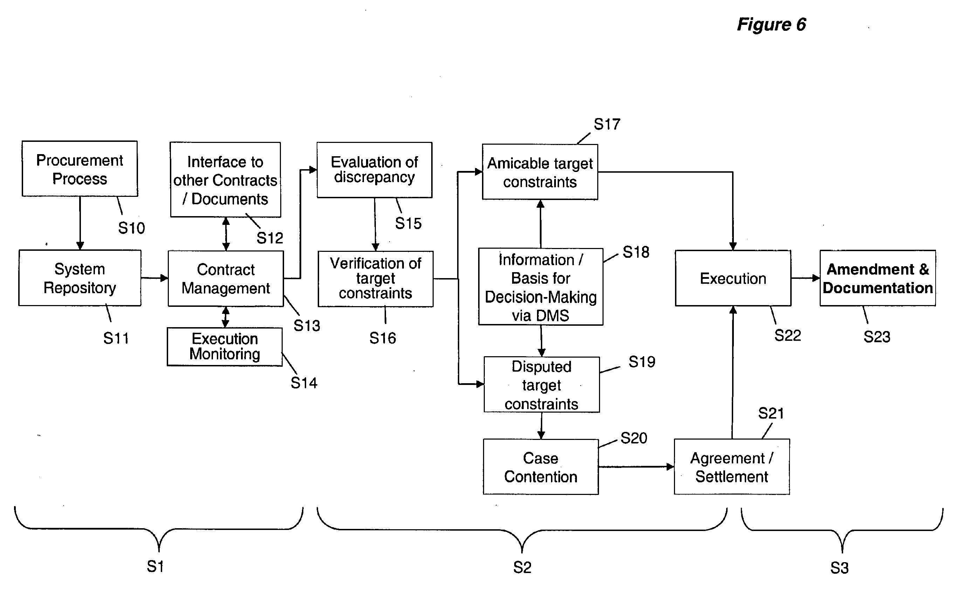

**Figure 6** shows a flow diagram of an exemplary computer-implemented process for integrated contract management and claim management. The process may be divided -into a pre-processing phase S1, an interface phase related to integrated contract and claim management S2, and phases related to possible consequences S3. The example process of Fig. 6 is shown with respect to a construction or building contract. It should be understood that a similar process may be performed using a system and method as shown in Figs. 4 and 5 with regard to legal contracts for other aspects of construction such as leasing, renting, buying, licensing, etc. contracts.

The pre-processing phase S1 may comprise the following steps. Before a building contract is created, a procurement process may take place S10. Data and/or information regarding the procurement process may be stored in a repository accessible by the system components or modules shown in Figs. 3 to 5. The repository may be an enterprise repository program or system, such as SAP-ERP. The repository may be accessed during contract management S13 to retrieve additional information and/or data related to a contract. Contract management S13 may by connected to an interface S12 which provides access to other contracts and/or documents, which could be relevant for the contract in question. Furthermore, contract management S13 may be monitored during execution S14. Monitoring S14 may comprise aspects which should be considered during contract management S13 such as an obligation to cooperate, possible pitfalls, and/or parameters for risk management.

After contract management S13 is terminated, which includes finalization of at least one contract, the pre-processing phase S1 is concluded and the contract is passed to the interface for contract and claim management S2. The phase of contract and claim management S2 may comprise the following steps. At S15, discrepancies and/or mismatches between target constraints formulated in clauses of the contract and corresponding actual data values are determined such that the target constraints are verified S16. Based on the verified target constraints S16, amicable target constraints S17 and disputed target constraints S19 are determined. Based on a electronic decision form computed from the target constraints of the contract in comparison with corresponding actual data values as described with reference to Figs. 4 and 5, decision making is supported S18. Decision making S18 may include accessing and retrieving information from a document management system comprising additional background information regarding the contract and/or its target constraints. With regard to the disputed target constraints S19, case contention S20 may take place.

After the above described steps within the interface for contract and claim management S2 are concluded, consequences are determined S3. The phase regarding possible consequences S3 may comprise the following steps. Based on the amicable target constraints S17 and/or an agreement and/or a settlement S21 with regard to case contention S20 of the disputed target constraints S19, the target constraints are executed S22. Based on the execution S22, the contract an the previously described related process is documented and/or possible amendments regarding the target constraints are incorporated into the contract and/or into the target constraints S23.

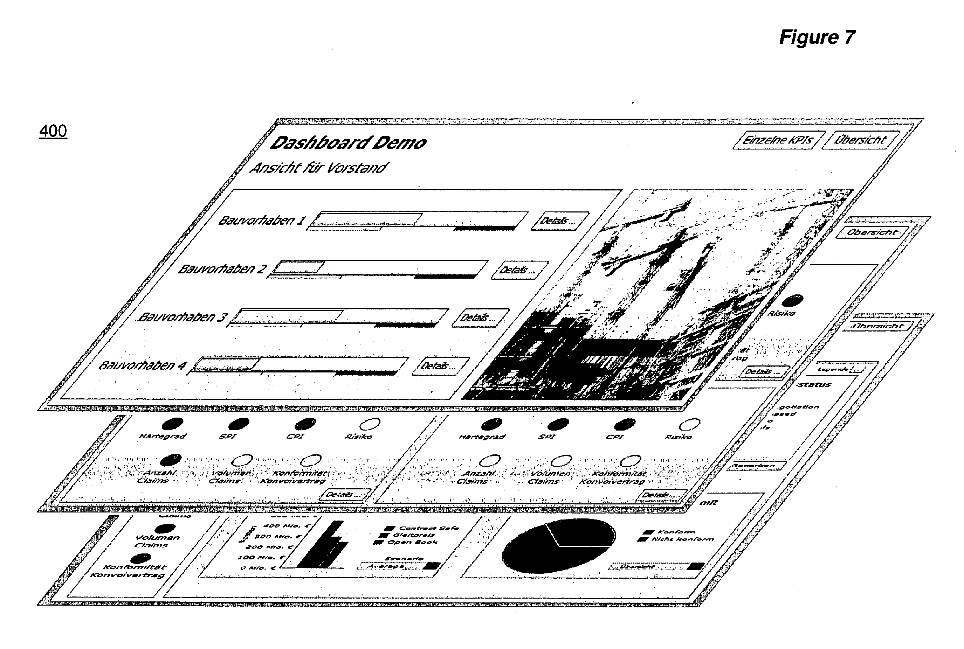

In the following and with reference to Figures 7 to 13, a graphical environment such as a dashboard 300, 400 is provided for illustrating and/or presenting reports generated based on one or more contracts, related target constraints and/or corresponding actual data values, and/or additional information and/or data regarding the contracts, to a plurality of different users.

As show in **Figure 7**, an exemplary implementation of a dashboard 400 for illustrating outputs such as reports generated during an integrated contract and claim management (as described with respect to the previous Figs. 3 to 6) may comprise one or more levels of abstraction regarding at least one contract and/or related data and/or information.

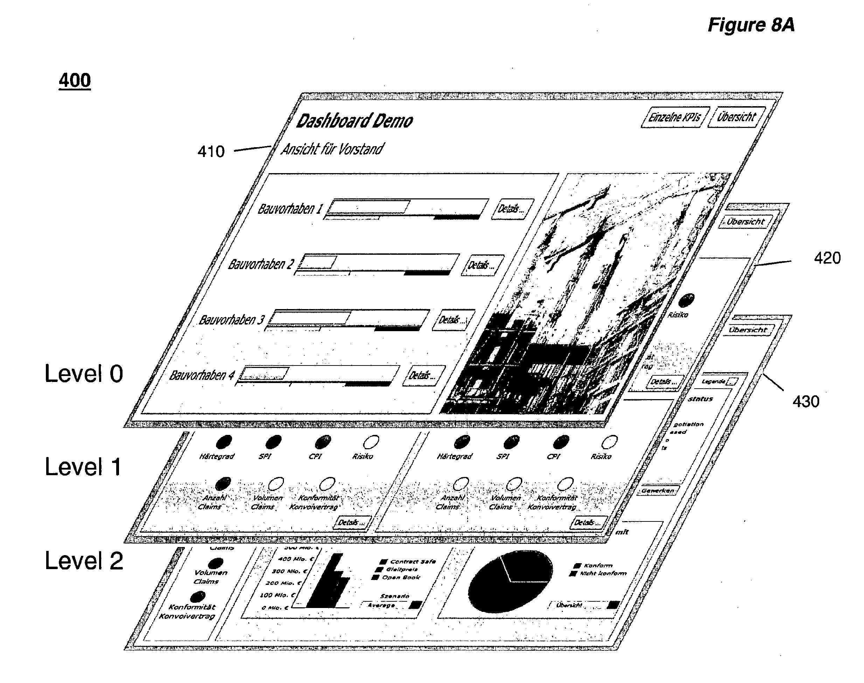

Figure 8A shows three exemplary levels 410, 420, 430 of an implementation of the dashboard 400: a first level 410, which is also referred to as level 0, a second level 420, which is also referred to level 1, and a third level 430, which is also referred to as level 2 are shown. In one example, the levels 410, 420, 430 are accessible by different user groups. For example, the first two levels 410, 420 may provide overviews of one or more different projects (e.g. construction projects). Said two levels 410, 420 may only be accessible by members of the management. Said two levels 410, 420 may provide a brief overview of each of the running projects (based on corresponding underlying contracts) such that members of the management may be provided with a global overview of each of the projects to make timely and efficient decisions on each of the projects. The third level 430 may comprise additional details of one of the projects, e.g. with respect to its underlying contract. In one example, the third level 430 may be accessible by one or more project managers of the respective project. In other words, more and even more detailed information and/or data regarding a project (and/or its underlying contract) may be accessible at different levels. In this way, a project manager may easily and efficiently determine one or more aspects of the project for which additional action (e.g. negotiations regarding constraints, actions regarding missed deadlines) are needed.

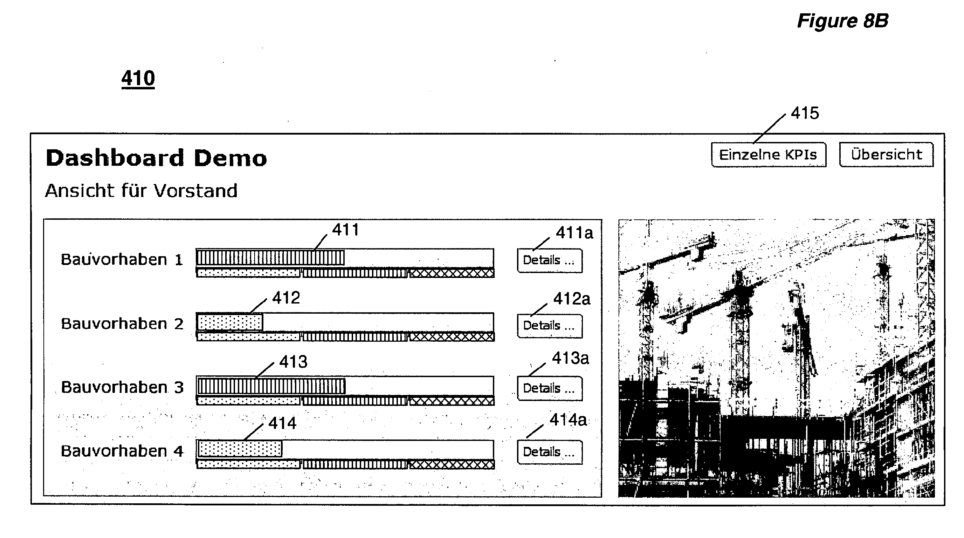

**Figure 8B** shows an exemplary picture (screenshot) of an implementation of the first level 410. Said level 410 may be accessible by a member of the management of a company and may be considered as an introduction site to currently running projects (in the shown example four construction projects). The site provides a first quick overview of each of the projects. For each of the projects, a bar 411, 412, 413, 414 represents a status for the corresponding project. Conditions according to which the status for each project are determined may depend on the underlying contract. In one example, the status may be represented using different hatchings, e.g. dots, strips, and cross hatches. In another exemplary implementation, traffic light colors (i.e. green, yellow, red) are used with their customary meaning, i.e. green meaning that everything is all right, yellow meaning that there may be at least one aspect which should be further controlled, and red meaning that there is at least one aspect in the project for which at least one target constraint of the underlying contract is not met and/or complied with.

Clicking on a button 411 a, 412a, 413a, 414a next to the bar 411, 412, 413, 414 for each of the projects, a next level in the dashboard 400 may be accessed, where this next level comprises further details on the corresponding project. In one example, the next level may be the third level 430 as shown in Fig. 8A.

Clicking on a button ("Einzelne KPIs") 415 on top of the screen, the user may access another level in the dashboard. In one example, said level may be the second level 420.

The dots show in Fig. 8B may relate to green, the strips to yellow, and the cross hatches to red. In the following, the colors green, yellow, red are assumed and used interchangeably with said hatchings, but it should be understood that any other indicators may be used instead.

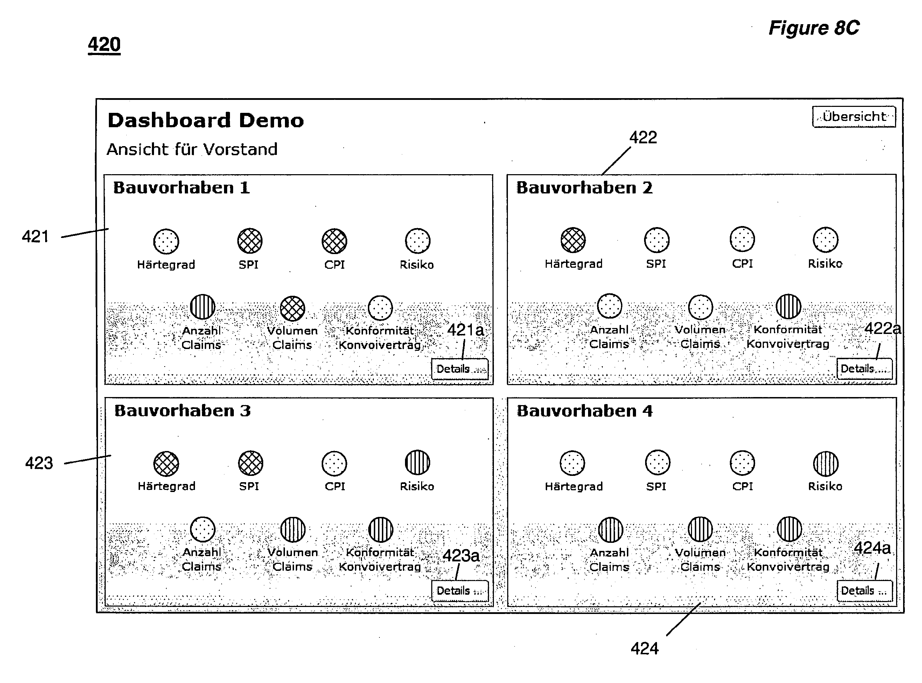

**Figure 8C** shows an exemplary picture (screenshot) of an implementation of the second level 420. In one exemplary implementation, for each project, seven different indicators 421, 422, 423, 424 selected for each project are represented, which may allow for a more detailed representation of a status of each of the projects. For example, the indicator "SPI" may relate to a schedule performance index, the indicator "CPI" may relate to a cost performance index, the index "Anzahl Claims" may relate to an amount of claims, the index "Volumen Claims" may relate to a cost volume of claims, the index "Konformität Konvoivertrag" may relate to a conformity with a convoy contract, the index "Convoy Contract" may relate to a contract that contractually binds a supplier, possibly not only for one project but also for other further projects, and/or the index "f.e." may relate to a company starting construction for at least one particular power plant. Furthermore, the company may also plan at least two additional power plants. To reduce costs in conjunction with a specific supplier, the company may be interested to sign up that supplier for all the projects with a corresponding convoy contract.

In case further information regarding at least one of the projects is required by the user, e.g. one of the indicators is colored red, the user may reach, by clicking on a button 421 a, 422a, 423a, 424a (e.g. labeled "Details...") to a further level of representation. Said further level may be the third level 430 as shown in Fig. 8A.

Clicking on a button 425 on the top of the display (e.g. labeled "Übersicht"), the user may reach a next higher level comprising less detailed information about each of the projects. In one example, the user may access the first level 410 as shown in Fig. 8A by clicking on said button 425.

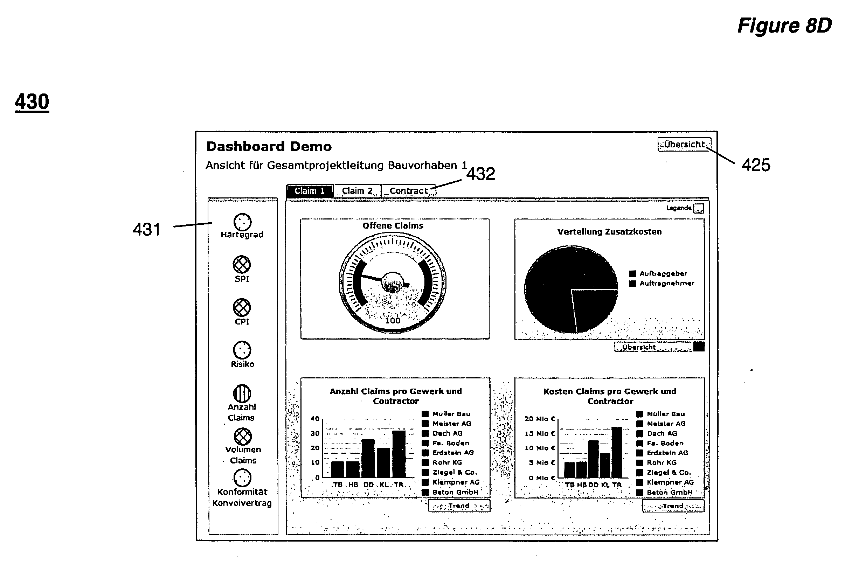

**Figure 8D** shows an exemplary picture (screenshot) of an implementation of the third level 430. The third level 430 may provide a detailed overview regarding contract management and/or claim management of one of the projects illustrated in the first two levels 410, 420 shown in Figs. 8A to 8C. On the left hand side of the screenshot, the indicators 431 for the project from the second level are shown. By clicking on one of three flags 432, the user may access one or more additional diagrams regarding claim management (e.g. "Claim1" and "Claim2") and/or contract management (e.g. "Contract") regarding the project.

Clicking on a button 435 on the top of the display (e.g. labeled "Übersicht"), the user may reach a next higher level comprising less detailed information about each of the projects. In one example, the user may access the first level 410 as shown in Fig. 8A by clicking on said button 435. In one exemplary implementation, only a user having corresponding access rights (e.g. a member of the management of the company running the project) may access the first level 410 when clicking on said button 435, while a user having lower access rights (e.g. a project manager of the project shown in Fig. 8D) may not be able to access the first level 410.

The diagrams shown in Fig. 8D are explained in further detail below.

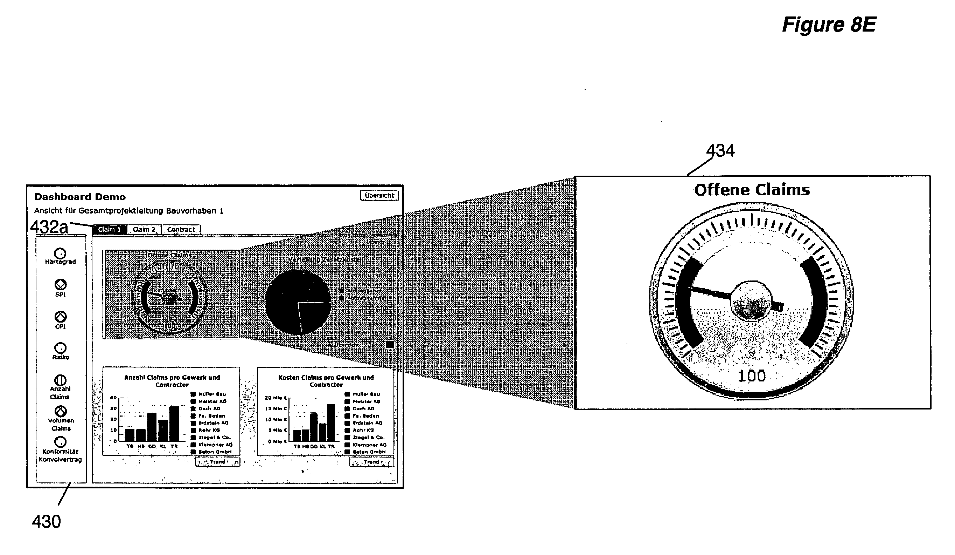

**Figure 8E** shows an exemplary picture (screenshot) of an implementation of the third level 430 of the dashboard, wherein the first flag 432a referring to claim management (e.g. labeled "Claim1") is selected for the selected project. In other words, a display of reports 434, 435, 436, 437 regarding claim management of the project based on one or more target constraints which need to be fulfilled within the project according to its underlying contract are shown. A first report 434 (e.g. labeled "offene claims", which may be understood to denote target constraints that are not yet fulfilled) comprises a dial indicator illustrating a total number of not yet fulfilled (or open) target constraints for the project selected in the third level 430. Coloring and/or hatching regarding whether a time line is met or not may be chosen as described above with reference to Fig. 8B. Limiting values using said coloring and/or hatching may be determined based on the project and/or its underlying contract, wherein the coloring and/or hatching may illustrate when a specific limiting value is reached. The dial indicator provides a quick overview, whether a number of open target constraints has exceeded a critical number.

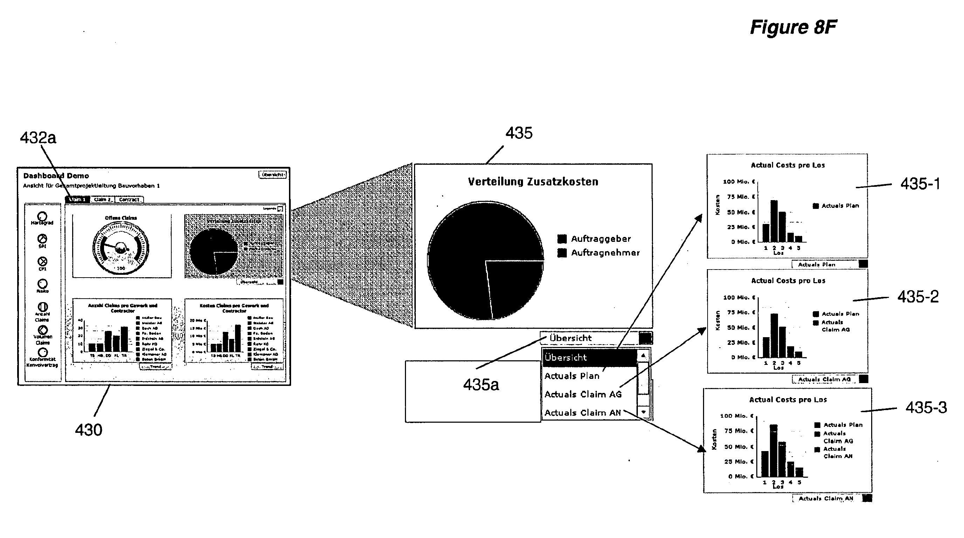

**Figure 8F** shows an exemplary picture (screenshot) of an implementation of the third level 430 of the dashboard, wherein the first flag 432a referring to claim management (e.g. labeled "Claim1") is selected for the selected project. In other words, a display of reports 434, 435, 436, 437 regarding claim management of the project based on one or more target constraints which need to be fulfilled within the project according to its underlying contract, are shown. A second report 435 (e.g. labeled "Verteilung Zusatzkosten") may denote a distribution of additional costs, which may occur from target constraints related to the contract of the project shown in the level 430, to an client and a contractor of the project, in a pie chart. Activating a drop-down menu (e.g. labeled "Übersicht", i.e. survey), a user may select one or more further views 435-1, 435-2, 435-3 of the report 435. In the additional report views 435-1, 435-2, 435-3, costs per lot are represented, e.g. in a bar chart. In the additional report views 435-1, 435-2, 435-3 a comparison between initially planned costs and actual costs per lot at a current point in time are shown during running of the project. The costs (planned and actual) may be divided according to client and contractor such that each party may have a quicker and easier survey regarding unplanned costs and their distribution for the project.

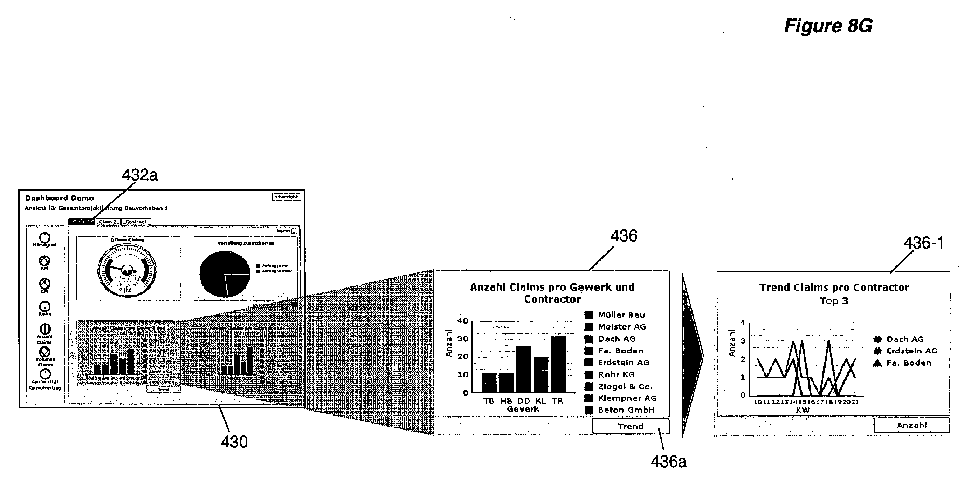

**Figure 8G** shows an exemplary picture (screenshot) of an implementation of the third level 430 of the dashboard, wherein the first flag 432a referring to claim management (e.g. labeled "Claim1") is selected for the selected project. In other words, a display of reports 434, 435, 436, 437 regarding claim management of the project based on one or more target constraints which need to be fulfilled within the project according to its underlying contract, are shown. A third report 436 illustrates a number of target constraints per lot or trade and their corresponding constructors in a bar chart. Said report 436 provides a clear and easy overview to determine within which lot or trade a high number of target constraints are to be met. Said constraints may then be ordered with respect to a corresponding constructor such that one or more actions can be derived from the report 436.

Selecting a button 436a (e.g. labeled "Trend"), a user may access a further view 436-1 of the report 436, showing a number of target constraints for three constructors involving a high number of target constraints within their corresponding contracts over a selected time period in a trend chart.

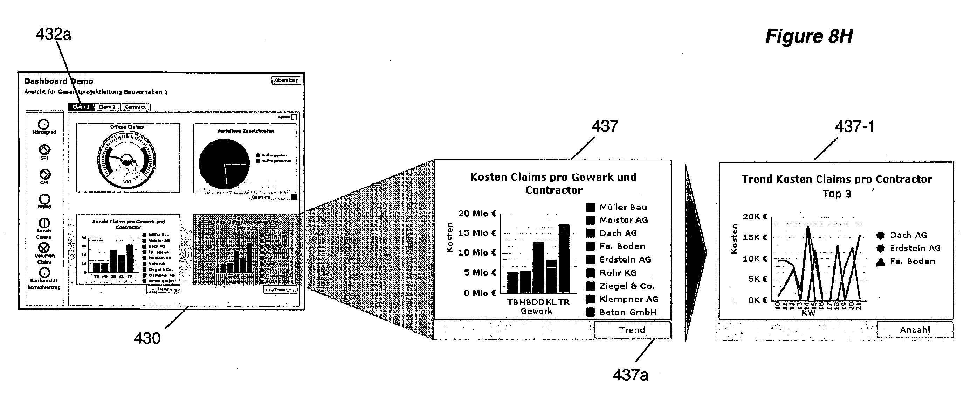

**Figure 8H** shows an exemplary picture (screenshot) of an implementation of the third level 430 of the dashboard, wherein the first flag 432a referring to claim management (e.g. labeled "Claim1") is selected for the selected project. In other words, a display of reports 434, 435, 436, 437 regarding claim management of the project based on one or more target constraints which need to be fulfilled within the project according to its underlying contract are shown. A fourth report 437 illustrates costs of target constraints (to be fulfilled according to a contract underlying the project) per lot or trade and contractor. In other words, the report 437 illustrates a distribution of costs for the target constraints to the lot or trade and corresponding constructors and/or sub-constructors in a bar chart. The report 437 provides a quick and easy overview regarding the lots for which cost intensive target constraints are to be met. Said costs may be related to responsible constructors and/or sub-constructors such that actions may be easily determined from the report 437.

By selecting a button 437a (e.g. labeled "Trend"), a user may access a further view 437-1 of the report 437; the further view illustrates costs for a number of target constraints related to three constructors, where the constructors include a high number of target constraints within their corresponding contracts over a selected time period in a trend chart.

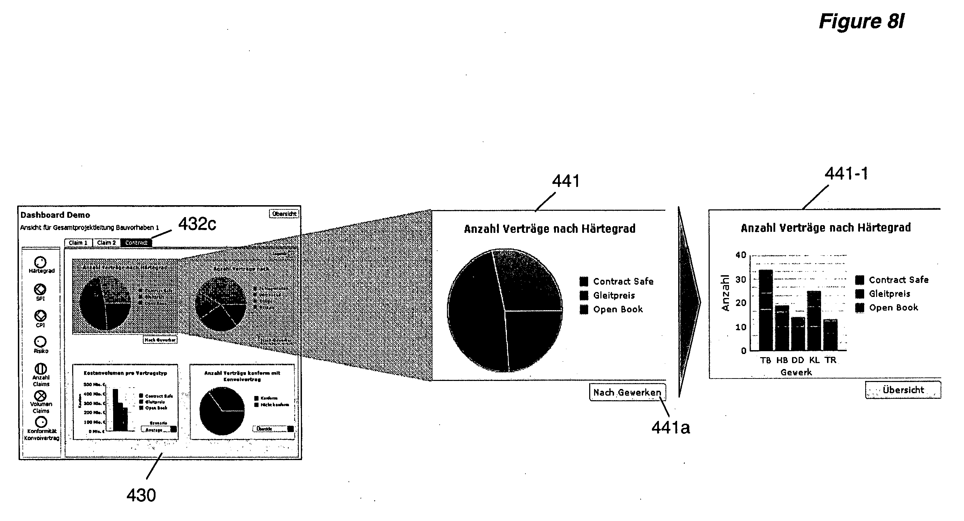

**Figure 8I** shows an exemplary picture (screenshot) of an implementation of the third level 430 of the dashboard, wherein the third flag 432c referring to contract management (e.g. labeled "contract") is selected for the selected project. In other words, a display of reports 441, 442, 443, 444 regarding contract management of the project based on processing and/or evaluation of a contract underlying the selected project. A first report 441 illustrates a plurality of contracts for the project divided into different grades in a pie chart. The grades may comprise the categories "contract safe", "sliding-scale price", and/or "open book". Said report 441 may provide a user a quick survey on a risk distribution in the project, e.g. if the fraction of "open book" contracts is high, the constructor has a high risk.

By selecting a button 441 a (e.g. labeled "Nach Gewerken"), a user may access a further view 441-1 of the first report 441, which illustrates a distribution of the contracts to the different grades, itemized according to each lot or trade in a bar chart.

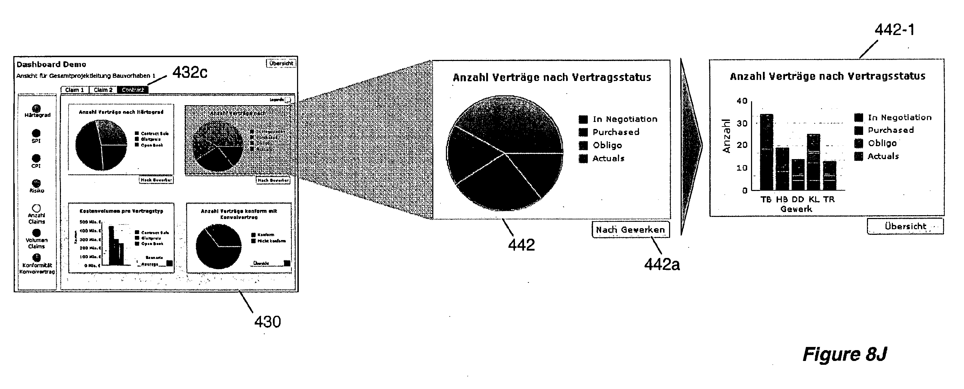

**Figure 8J** shows an exemplary picture (screenshot) of an implementation of the third level 430 of the dashboard, wherein the third flag 432c referring to contract management (e.g. labeled "contract") is selected for the selected project. In other words, a display of reports 441, 442, 443, 444 regarding contract management of the project based on processing and/or evaluation of a contract underlying the selected project. A second report 442 illustrates a distribution of one or more contracts associated with the project distributed according to one or more categories, e.g. the categories "in negotiation", "purchased", "obligation", and/or "actuals", in a bar chart. Hence, the report 442 provides a quick overview on a status of contract negotiations regarding the project.

By selecting a button 442a (e.g. labeled "Nach Gewerken"), a user may access a further view 442-1 of the second report 442, which illustrates a distribution of a status of each of the contracts, where the different grades are itemized according to each lot or trade in a bar chart.

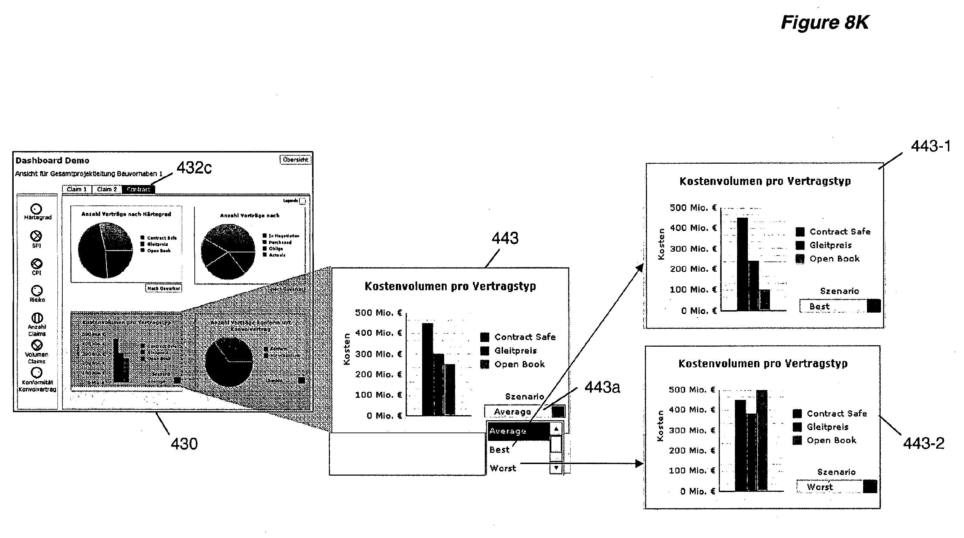

**Figure 8K** shows an exemplary picture (screenshot) of an implementation of the third level 430 of the dashboard, wherein the third flag 432c referring to contract management (e.g. labeled "contract") is selected for the selected project. In other words, a display of reports 441, 442, 443, 444 regarding contract management of the project based on processing and/or evaluation of a contract underlying the selected project. A third report 443 illustrates a distribution of costs per contract for the project with regard to different grades in a bar diagram. The grades may comprise the categories "contract safe", "sliding-scale price", and/or "open book". The report 443 provides a quick survey over a cost distribution according to the different contracts and related grades.

Accessing a drop-down menu 443a, a user is provided with additional views 443-1, 443-2 of the report 443. By selecting best 443-1 and worst-443-2 scenarios regarding the costs in the categories "open book" and/or "sliding-scale price", the user retrieves an overview on the costs for each of the contracts in said categories in the worst case and in the best case.

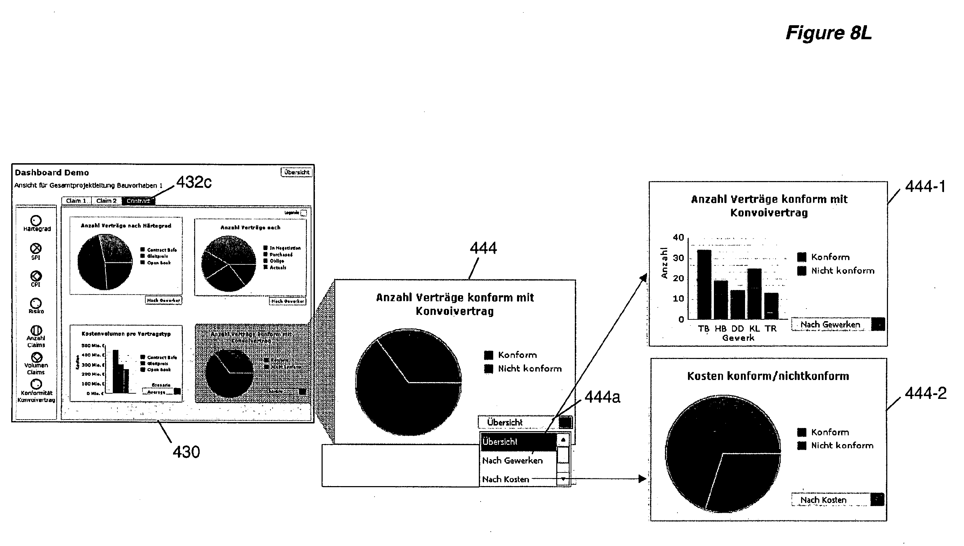

**Figure 8L** shows an exemplary picture (screenshot) of an implementation of the third level 430 of the dashboard, wherein the third flag 432c referring to contract management (e.g. labeled "contract") is selected for the selected project. In other words, a display of reports 441, 442, 443, 444 regarding contract management of the project based on processing and/or evaluation of a contract underlying the selected project. A fourth report 444 illustrates a distribution of the number of contracts of the project with respect to its conformity with a convoy contract in a bar chart. The report 443 provides a user with a quick overview of how many contracts are contracted outside the convoy contract.

Selecting a drop-down menu 444a, additional views 444-1, 444-2 to the report are presented to a user. In one view 444-1, the information of the report 444 is distributed according to one or more lots or trades in a bar chart. In another view 444-2, costs for conform and/or non-conform contracts with the convoy contract are opposed in a pie chart.

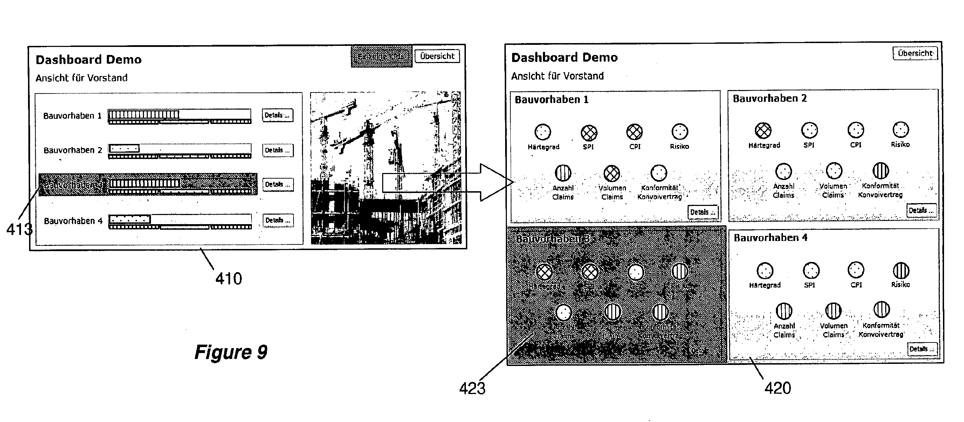

**Figure 9** shows an exemplary use case of the dashboard 400, wherein a user, e.g. with respective access rights, may get an overview of one or more running projects. A screenshot (or picture) of a possible implementation of the dashboard 400 is shown in Fig. 9. It should be understood that other implementations, e.g. in English or French, may also be possible.

In one example, the user opens the dashboard 400, and accesses a first level (or level 0) 410 of the dashboard according to his access rights ; the first level 410 of the dashboard provides an overview on currently running projects (e.g. of a company of which the user is a member of the management). The first level 410 may be similar to the first level 410 described with reference to Fig. 8B. Since a third project 413 is yellow (or shaped with strips), the user may activate a button (e.g. labeled "Einzelne KPIs") 415 which leads him to a more detailed overview of the projects on a second level 420. The second level 420 may be similar to the second level 420 described with reference to Fig. 8C.

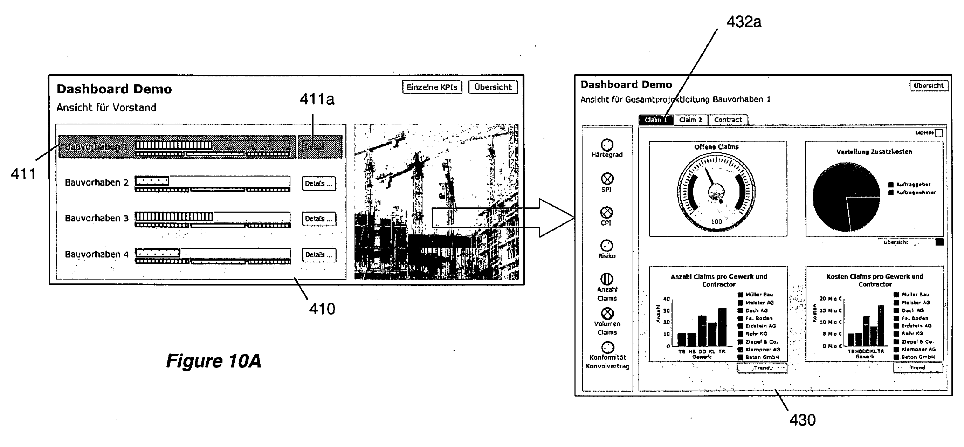

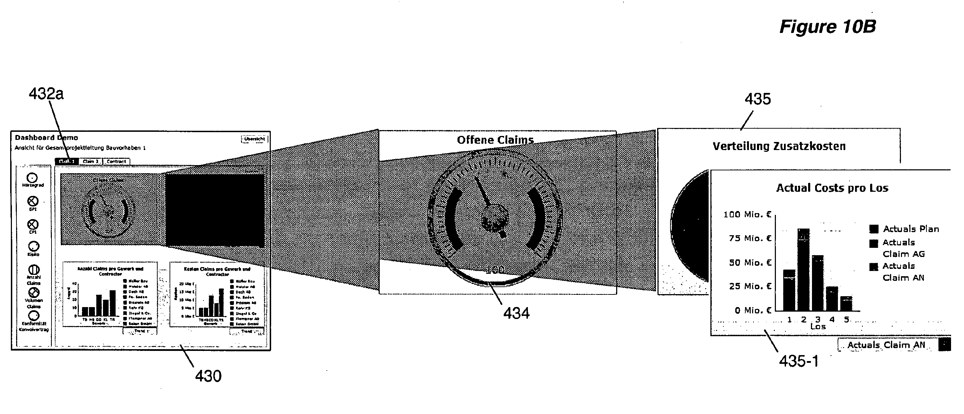

On the second level 420, the third project 423 is illustrated with regard to seven different indicators. The user may discover that the indicators "Härtegrad" (grade) and "SPI" are red (or dot shaped). Furthermore, the indicators "Risiko" (risk), "volume claims" (volume of target constraints), and "Konformität Rahmenvertrag" (conformity with a framework contract) are yellow (or strip shaped). The user may therefore contact another user (e.g. a leader or manager who is responsible for the third project) to retrieve additional information regarding said indicators. For example, if at least one of the indicators forces to take an action, the other user may initiate an ad-hoc workflow. This could be done automatically or manually by the other user. **Figures 10A** **and** **10B** show another exemplary uses case of the dashboard 400, wherein a user with appropriate access rights may get an overview of one or more running projects and further consider detailed information regarding at least one of the projects. A screenshot (or picture) of a possible implementation of the dashboard 400 is shown. It should be understood that other implementations, e.g. in English or French, may also be possible.

As shown in Fig. 10A, a user accesses the first level 410 of the dashboard 400. To access the first level 410, the user may have corresponding access rights. From the first level 410, the user has an overview over an actual situation (or overall state) of each of the running projects. For example, a first project 411 has an overall state denoted by yellow highlighting (or strips). The yellow highlighting may have the meaning indicated above. Therefore, the user may access additional information regarding the first project 411. By activating a button (labeled "Details...") 411 a, the user accesses the third level 430 of the dashboard with regard to the selected project 411. In the third level 430, an overall state of the project 411 is represented by seven indicators. The user has selected a first flag 432a (e.g. labeled "Claim1") which is associated with a claim management overview of the first project 411.

As shown in Fig. 10B, a dial indicator 434 regarding a number of open target constraints (i.e. target constraints formulated in the underlying contract of the project 411 which are not yet fulfill and/or not fulfilled as agreed) is denoted by yellow highlighting or strips. Said highlighting indicates that a number of target constraints are assembled such that the highlighting is turned to yellow (or strips). Based on said representation 434 with regard to the open claims, the user may look at a further representation 435, which presents a distribution of costs related to the open target constraints. From said representation 435, the user quickly comprises a rate of additional costs which may be associated with the open claims. Accessing a drop down menu associated with the second representation 435 regarding the additional cost (e.g. a menu 435a as shown in Fig. 8F), the user may receive a detailed bar chart representation 435-1 of the additional costs. For example, the user may understand from the further representation 435-1 that the additional costs regarding the open claims correlate with planned costs for the project 411 and that a percentage of the additional costs may not be paid but the company.

In one exemplary reaction to the received overview of the project 411, the user may contact another user who is responsible for the project. In another exemplary reaction to the received overview of the project 411, the system may automatically generate and execute a workflow regarding possible problems and their solutions associated with the received information. For example, the workflow may comprise a goal of reducing the costs with respect to the open target constraints. Furthermore, a process of planning the project may be optimized in that a lower number of target constraints may arise, e.g. in that subject matter experts may define an improved planning process for similar projects.

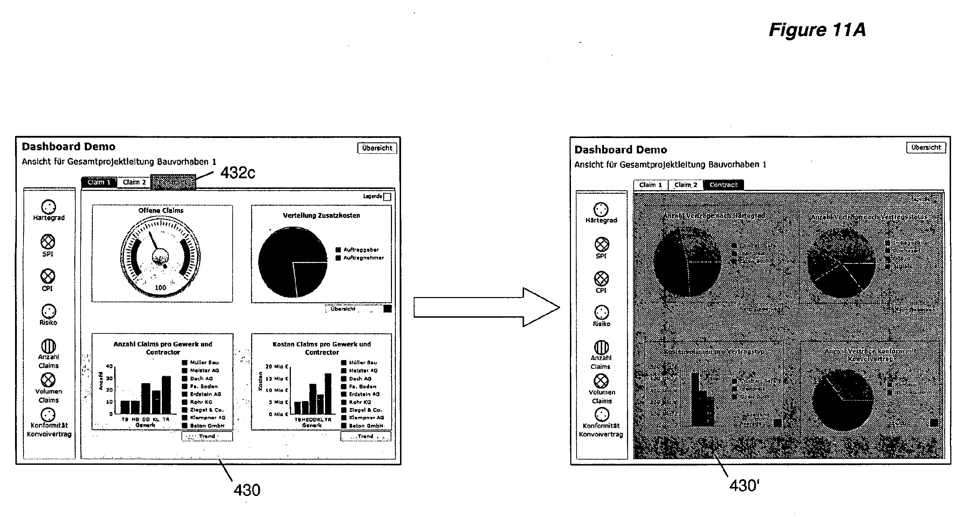

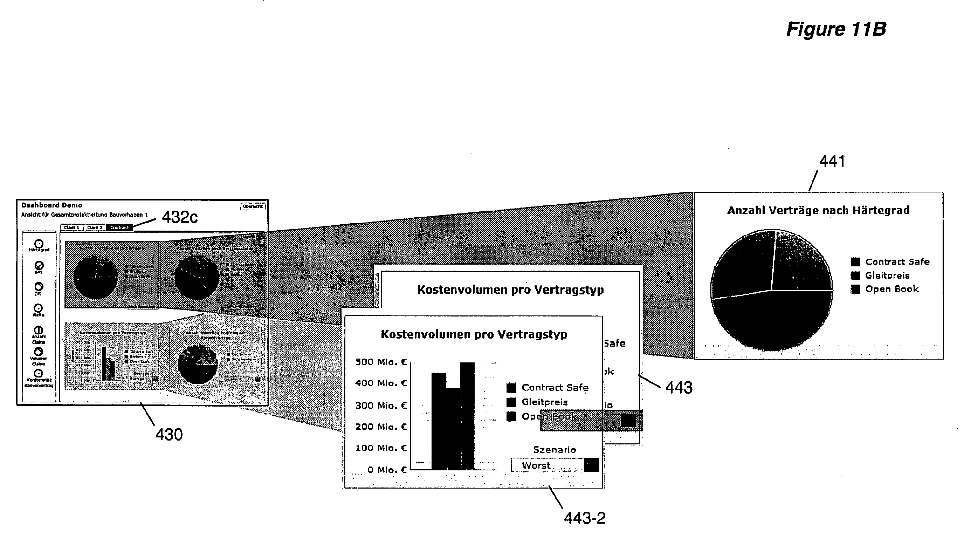

**Figures 11A** **and** **11B** show another exemplary use case of the dashboard 400, wherein a user, e.g. with respective access rights, may get an overview about one or more running projects and further consider detailed information regarding at least one of the projects. A screenshot (or picture) of a possible implementation of the dashboard 400 is shown. It should be understood that other implementation, e.g. in English or French may also be possible.

A user having only access rights for the third level 430 in the dashboard 400 may open the dashboard and receives the third level 430 representing a project the user is involved in and/or responsible for. For example, in order to determine whether at least one contract underlying the project may lead to one or more risks for the project, the user activates a flag 432c in order to receive an overview over the project 430' regarding its related contract management as shown in Fig. 11A. For this it becomes clear that since the dashboard and the underlying computations as introduced with regard to Figs. 3 to 5 incorporate or integrate claim management and contract management with regard to a possibly large number of projects and their related contracts, a user may easily switch between said two aspects relating to at least one of the projects.

For example, in a first diagram (or representation) 441 as shown in Fig. 11A, the user may have a quick overview in a pie chart of a distribution of the at least one contract underlying the project with respect to three different grades (e.g. contract safe, slide-scale price, and/or open book). Said grades may indicate financial risks for the project. A extent of said risks may become clear from another diagram (or representation) 443 with regard to a cost volume for each of the contracts. For example, a contract having grade "contract safe" may have a fixed cost risk, whereas contracts having grade "slide-scale price" and/or "open book" may have a variable cost risk. In one exemplary implementation, the underlying contract and claim management system may compute cost scenarios based on the grades for the contracts related to a project such that the user may for example receive a worst case scenario 443-2 of the costs per contract (and/or per contract type) by activating a drop down menu associated with the diagram 443.

In one exemplary implementation, based on generated reports (e.g. those shown in Fig. 11 B), the contract and claim management system may generate and execute a workflow in order to overcome problems and/or drawbacks associated with the contracts underlying the project, e.g. having the goal to reduce and/or minimize risks associated with a contract structure as realized in association with the project. For example, the workflow may force to conclude one or more contracts for a planned project having the grade "contract safe". Furthermore, the workflow may schedule new and/or changed conditions and/or specifications to users responsible for contract management.

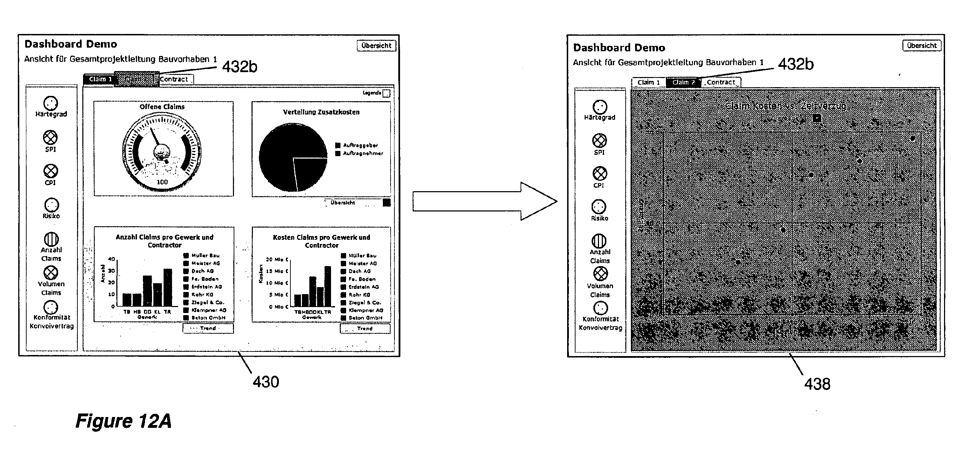

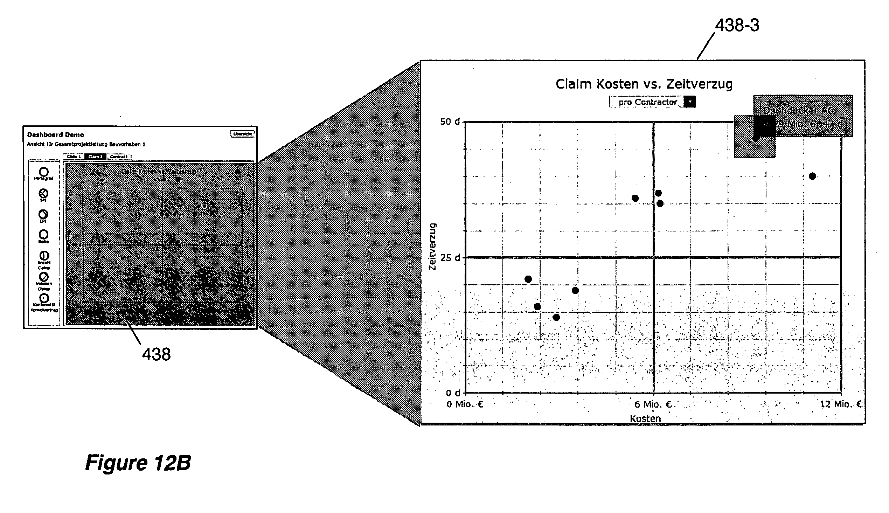

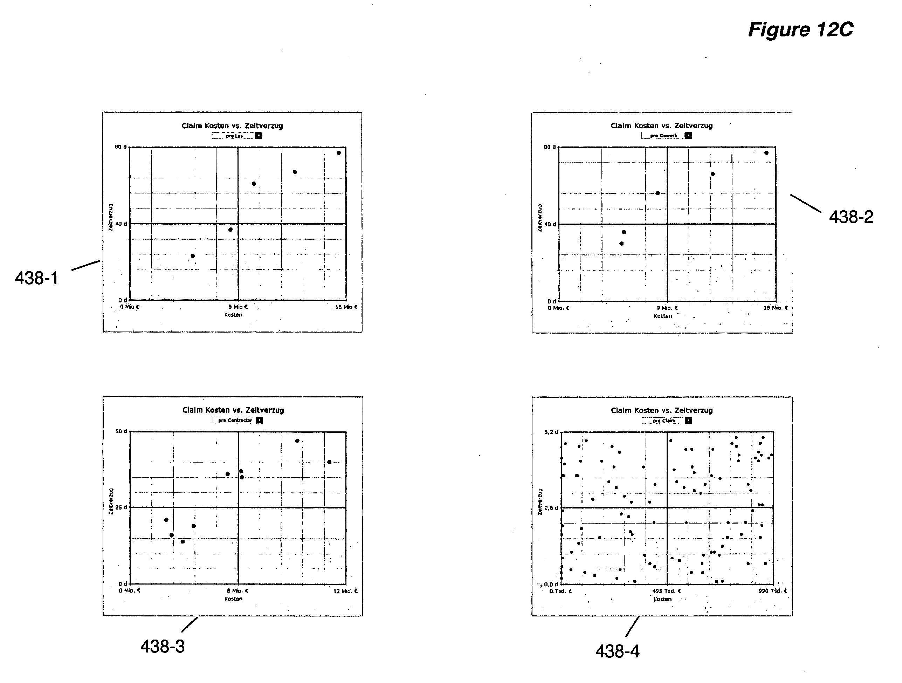

**Figures 12A****,** **12B****, and** **12C** show yet another exemplary use case of the dashboard 400, wherein a user, e.g. with respective access rights, may get an overview about one or more running projects and further consider detailed information regarding at least one of the projects. A screenshot (or picture) of a possible implementation of the dashboard 400 is shown. It should be understood that other implementation, e.g. in English or French may also be possible.

A user having only access rights for the third level 430 in the dashboard 400 may open the dashboard and receives the third level 430 representing a project the user is involved in (and/or responsible for). For example, a new awarding of a contract may be scheduled. Accordingly, the user may access claim management regarding the planned project by activating a corresponding flag 432b (e.g. labeled "Claim2") in the third level 430 to access a corresponding view as shown in Fig. 12A. For example, the user may have the goal to keep a number of target constraints low for the planned project. Hence, by activating the corresponding flag 432b, the user receives a representation 430" comprising a point diagram 438 which enables the user to analyze of target constraints already selected from one or more contracts related to the planned project. On the x-axis, the point diagram 438 represents costs related to the target constraints and on the y-axis, the point diagram 430" represents a (time) delay with regard to the target constraints.

As shown in Fig. 12B, the user may be interested in a delay and costs for the target constraints according to each of a plurality of contractors. Therefore, the user may chose a corresponding menu point 438a in a drop down menu associated with the point diagram 438. For example, in the quadrant top right, contractors are represented having total target constraints with the largest delay and therefore are associated with high costs. For example, the user may hover the mouse over one of the points in the quadrant top right of the point diagram 438 thus receiving the information that a contractor named "Firma Dachdecker AG" has in total the highest delay of 47 days and therefore produce additional costs of 9,29 million Euros.

Based on the information and/or data represented in the point diagram 438, a workflow may be automatically generated and subsequently activated by the underlying claim and contract management system with the goal to reduce target constraints having the represented negative impact. For example, the system may indicate a contractor performing worse regarding delay and corresponding cost. The system may provide the user with alternative contractors for a corresponding contract.

Fig. 12C provides an overview of different aggregations 438-1, 438-2, 438-3, 438-4 for the point diagram 438 which represents costs of target constraint and related (time) delays. For example points (representing target constraints) in the bottom left quadrant may be non-critical whereas points in the top right quadrant may be (highly) critical. A first aggregation 438-1 may represent costs and related delays for target constraints per award (or lot). A second aggregation 438-2 may represent costs and related delays for target constraints per trade. A third aggregation 438-3 may represent costs and related delays for target constraints per contractor. A fourth aggregation 438-4 may represent costs and related delays for all target constraints related to contracts associated with a planned project.

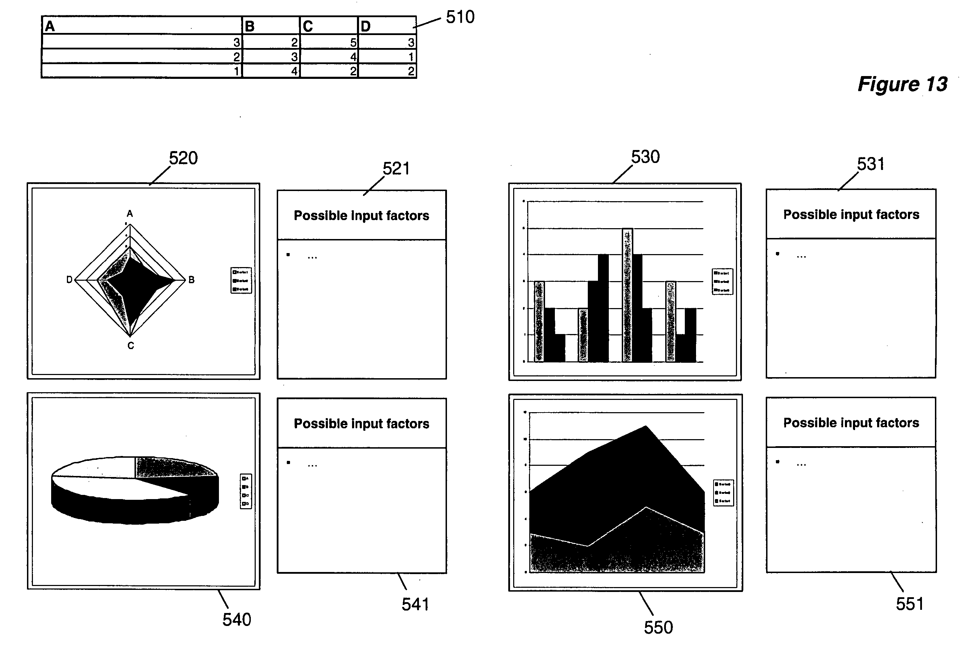

**Figure 13** shows exemplary reporting tools which may be used to implement the dashboard 400 for the underlying contract and claim management system. for example, a user may use a selection function represented in a table 510. Furthermore, reports generated by the contract and claim management system may be represented using different kinds of diagrams 520, 530, 540, 550 (e.g. a star chart 510, a bar chart 520, a pie chart 540, and/or a function-based chart 550). Each of the diagrams 510, 520, 530, 540 may be defined based on different (possible) input factors 521, 531, 541, 551.

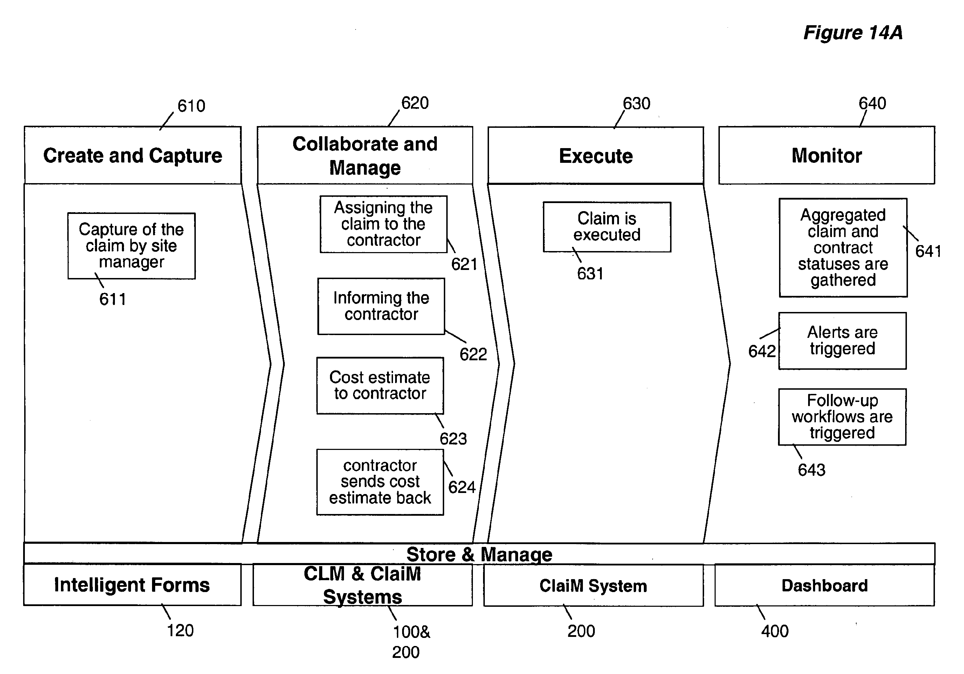

**Figure 14A** shows an exemplary workflow of integrated contract management and claim management using a system and corresponding methods as e.g. shown in Figs. 3 to 5. For example, the workflow may comprise four phases 610, 620, 630, 640.

The first phase 610 may relate to creating and capturing target constraints, comprising that a user (e.g. a site manager making an inspection of a site of an associated construction project) may capture one or more actual data values related to target constraints of at least one underlying contract, at 611. The actual data values may be captured in an electronic target constraint form 50, which may be an intelligent form. The electronic target constraint form 50 may be accessible online and/or offline through a (possibly mobile) client device. In one exemplary implementation, the target constraints and related actual data values may be enhanced with metadata to automatically process and manage them during the other phases 620, 630, 640.

The second phase 620 may relate to collaboration and management of the target constraints and their related actual data values captured during the first phase 610. Actions 621, 622, 623, 624 comprised in the second phase 620 may be automatically performed by the contract and claim management system 100 based on the target constraints, related actual data values, corresponding metadata, and/or additional information and/or data related to at least one contract formulating the target constraints.

At 621, the target constraints and related actual data values may be assigned to one or more constructors. This may be done automatically by the contract and claim management system 100 by comparing contract data of the at least one contract with data regarding to the one or more constructors. Subsequently, at 622, selected constructors are informed. Furthermore, at 623, the contract and claim management system 100 computes cost estimates related to at least one of the target constraints and corresponding actual data values, depending on possible determined deviations and/or mismatches of the actual data values from the target constraints. The cost estimates may be sent to the corresponding constructor. Based on the cost estimates, the constructor sends back the corresponding cost estimate.

At the third phase 630, the target constraints and corresponding actual data values are executed by the claim management system. The third phase 630 may comprise target constraint processing and/or execution, at 631.

For example, the execution of the target constraint may comprise one or more of the following actions. In one exemplary execution, only an actual execution of the derivation may be represented, e.g. if the target constraint will be removed or replaced by a status that represents the expected result. During execution, the target constraint and other target constraints may be aggregated. For example, at least some or all target constraints are gathered in order to provide related data for the dashboard. In conjunction with aggregating the target constraints, the target constraints may be evaluated regarding amount, impact, source, and/or cause (e.g. which (sub-)constructors caused a target constraint incident.

In view of executing one or more target constraints, a user may create an ad-hoc workflow for continuous activities. Alternatively, a pre-defined workflow may be provided comprising only some individual selection options in order to standardized processes.

In an exemplary workflow, a target constraint may exceed a certain specification (e.g. the financial impact is higher than defined in the underlying contract and/or exceeds a time period of more than two weeks beyond what has be specified in the contract). In this case, during execution of the target constraint, a workflow may be automatically initiated (e.g. to inform a decision maker) and/or alert one or more related persons to start a corresponding action. For example, a responsible person is alerted to integrate the legal department for a double-check of the not met target constraint. Hence, one exemplary workflow could be executed as follows:
1. Review of the decision maker.
2. Alerted action to forward the issue to the legal department.
3. The decision maker needs to review and understand a corresponding legal statement.
4. Automatically forward the alert to the financial department.
5. Automatically alert and or create a memo for a next board meeting concerning the not met target constraint.

The fourth phase 640 may relate to monitoring of execution and processing of the target constraints and the related actual data values. Monitoring may be performed at the dashboard 400. At 641, aggregated target constraints and statuses related to the underlying contracts are gathered. Based on said computations, one or more alerts may be triggered, at 642. Regarding to the alerts, follow-up workflows may be generated, executed, and/or triggered.

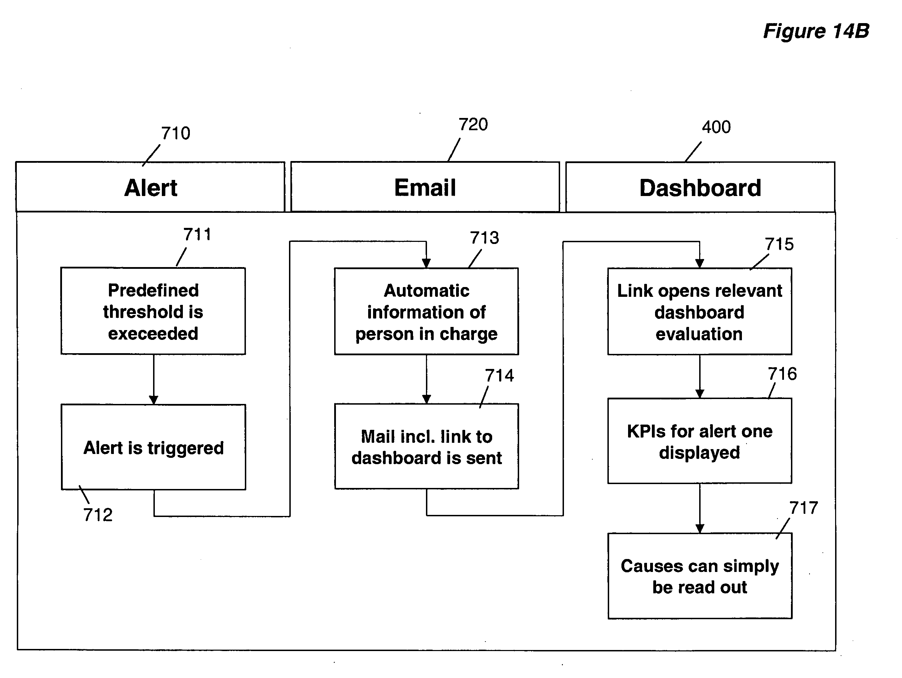

**Figure 14B** shows an exemplary workflow of integrated contract management and claim management using a system and corresponding methods as e.g. shown in Figs. 3 to 5. The workflow relates to an exemplary risk-management using the contract and claim management system. The workflow may be divided into three phases 710, 720, and 400, wherein the first phase 710 relates to alerts, the second phase may be performed using an email system 720, and the third phase may be performed at the dashboard 400.

At 711, the contract and claim management system may detect a mismatch (e.g. a predefined threshold is exceeded) between a target constraint and a corresponding actual data value captured at 610 as shown in Fig. 14A. Based on the mismatch, an alert is triggered at 712. Then a user who is responsible for the target constraint for which the mismatch is detected, is automatically informed by email, for example, at 713. At 714, the contract and claim management system automatically sends the email including a link to the target constraint in the underlying contract to the dashboard 400. Based on the link, relevant and/or corresponding evaluations and/or computations are opened (e.g. by providing one or more reports as shown in Figs. 7 to 12C) in the dashboard, at 715. At 716, possible Key Performance Indicators (KPI) relating to the alert are displayed such that a user may simply read out one or more causes from the presented reports at 717.

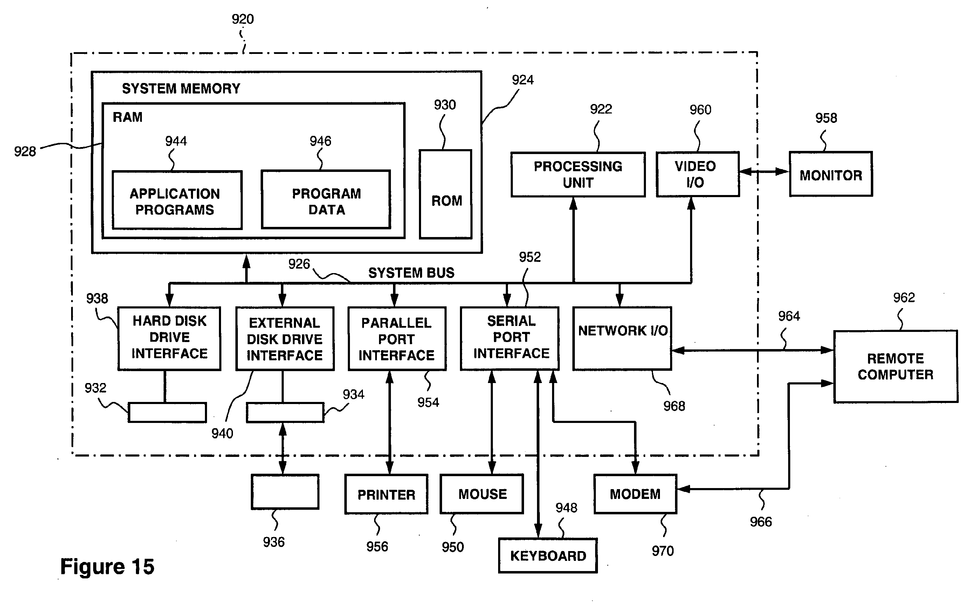

**Figure 15** shows an exemplary system for implementing the invention including a general purpose computing device in the form of a conventional computing environment 920 (e.g. a personal computer). The conventional computing environment includes a processing unit 922, a system memory 924, and a system bus 926. The system bus couples various system components including the system memory 924 to the processing unit 922. The processing unit 922 may perform arithmetic, logic and/or control operations by accessing the system memory 924. The system memory 924 may store information and/or instructions for use in combination with the processing unit 922. The system memory 924 may include volatile and nonvolatile memory, such as a random access memory (RAM) 928 and a read only memory (ROM) 930. A basic input/output system (BIOS) containing the basic routines that helps to transfer information between elements within the personal computer 920, such as during start-up, may be stored in the ROM 930. The system bus 926 may be any of several types of bus structures including a memory bus or memory controller, a peripheral bus, and a local bus using any of a variety of bus architectures.

The personal computer 920 may further include a hard disk drive 932 for reading from and writing to a hard disk (not shown), and an external disk drive 934 for reading from or writing to a removable disk 936. The removable disk may be a magnetic disk for a magnetic disk driver or an optical disk such as a CD ROM for an optical disk drive. The hard disk drive 932 and the external disk drive 934 are connected to the system bus 926 by a hard disk drive interface 938 and an external disk drive interface 940, respectively. The drives and their associated computer-readable media provide nonvolatile storage of computer readable instructions, data structures, program modules and other data for the personal computer 920. The data structures may include relevant data for the implementation of the method for connecting contract management and claim management, as described above. The relevant data may be organized in a database, for example a relational or object database.

Although the exemplary environment described herein employs a hard disk (not shown) and an external disk 936, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 936, ROM 930 or RAM 928, including an operating system (not shown), one or more application programs 944, other program modules (not shown), and program data 946. The application programs may include at least a part of the functionality as depicted in Figs. 1 to 14B.

A user may enter commands and information, as discussed below, into the personal computer 920 through input devices such as keyboard 948 and mouse 950. Other input devices (not shown) may include a microphone (or other sensors), joystick, game pad, scanner, or the like. These and other input devices may be connected to the processing unit 922 through a serial port interface 952 that is coupled to the system bus 926, or may be collected by other interfaces, such as a parallel port interface 954, game port or a universal serial bus (USB). Further, information may be printed using printer 956. The printer 956, and other parallel input/output devices may be connected to the processing unit 922 through parallel port interface 954. A monitor 958 or other type of display device is also connected to the system bus 926 via an interface, such as a video input/output 960. In addition to the monitor, computing environment 920 may include other peripheral output devices (not shown), such as speakers or other audible output.

The computing environment 920 may communicate with other electronic devices such as a computer, telephone (wired or wireless), personal digital assistant, television, or the like. To communicate, the computer environment 920 may operate in a networked environment using connections to one or more electronic devices. **Figure 15** depicts the computer environment networked with remote computer 962. The remote computer 962 may be another computing environment such as a server, a router, a network PC, a peer device or other common network node, and may include many or all of the elements described above relative to the computing environment 920. The logical connections depicted in **Figure 15** include a local area network (LAN) 964 and a wide area network (WAN) 966. Such networking environments are commonplace in offices, enterprise-wide computer networks, intranets and the Internet and may particularly be encrypted.

When used in a LAN networking environment, the computing environment 920 may be connected to the LAN 964 through a network I/O 968. When used in a WAN networking environment, the computing environment 920 may include a modem 970 or other means for establishing communications over the WAN 966. The modem 970, which may be internal or external to computing environment 920, is connected to the system bus 926 via the serial port interface 952. In a networked environment, program modules depicted relative to the computing environment 920, or portions thereof, may be stored in a remote memory storage device resident on or accessible to remote computer 962. Furthermore other data relevant to the method for connecting contract management and claim management (described above) may be resident on or accessible via the remote computer 962. It will be appreciated that the network connections shown are exemplary and other means of establishing a communications link between the electronic devices may be used.

The above-described computing system is only one example of the type of computing system that may be used to implement the method for connecting contract management and claim management.

### List of Reference Numerals

- 10: pre-contractual phase
- 11: creation phase
- 12: negotiation phase
- 13: reports for GUI
- 14: contract management
- 20: term of contract phase
- 21: controlling phase
- 22: claim management
- 30: closure phase
- 31: closing phase
- 32: reports for GUI
- 100: contract management
- 110: contract
- 120: electronic target constraint form
- 130: matching or matching process
- 131: project
- 132: contract clause
- 133: notes related to contract clause
- 140: document management
- 150: commercial management
- 160: electronic decision form
- 170: workflow
- 180: decision
- 200: claim management
- 202, 202a, 202b, 202c: target constraint
- 202aa, 202ab: GUI elements related to a target constraint
- 204: project overview
- 206: process steps
- 206a-206i: specific process steps relating to a target constraint
- 208: target constraint overview
- 210: document preview
- 212: action items
- 300: graphical environment or graphical user interface
- 310, 320: level of a graphical user interface
- 400: dashboard
- 410: first level
- 411, 412, 413, 414: project
- 411 a, 412a, 413a, 414a, 415: button
- 420: second level
- 421, 422, 423, 424: project with indicator representation
- 421 a, 422a, 423a, 424a, 425: button
- 430, 430', 430": third level
- 431: indicators
- 432: flag bar
- 432a, 432b, 432c: flag
- 434, 435, 436, 437,:
- 438, 441, 442,443, 444: report
- 435a, 436a, 437a, 441a:
- , 442a,443a, 444a: drop down menu
- 435-1, 435-2, 435-3, 436-1, 437-1, 441-1,:
- 442-1, 443-1, 443-2, 444-1,444-2: report view
- 510: selection function table
- 520, 530, 540, 550: diagram
- 521, 531, 541, 551: field for input factors
- 610, 620, 630, 640, 710, 720: processing phase
- 611-643, 711-717: processing steps
- S10-S23: computation steps of integrated contract and claim management
- 920: conventional computing environment
- 922: processing unit
- 924: system memory
- 926: system bus
- 928: random access memory (RAM)
- 930: read only memory (ROM)
- 932: hard disk drive
- 934: external disk drive
- 936: removable disk
- 938: hard disk drive interface
- 940: external disk drive interface
- 944: one or more application programs
- 946: program data
- 948: keyboard
- 950: mouse
- 952: serial port interface
- 954: parallel port interface
- 956: printer
- 958: monitor
- 960: video input/output
- 962: remote computer
- 964: local area network (LAN)
- 966: wide area network (WAN)
- 968: network I/O
- 970: a modem

## Claims

1. Computer-implemented method for connecting contract management (100) and claim management (200), the method comprising:
annotating target constraints, to be fulfilled by at least one contract (110), with machine-readable and/or machine-processible metadata;
providing an electronic target form (120) based on the annotated target constraints of the contract (110);
receiving through an interface at least one actual data value corresponding to at least one of the target constraints in the electronic target constraint form (120);
determining, using a processor, whether the at least one actual data value matches the at least one target constraint; and
if a mismatch between the at least one actual data value and the at least one target constraint is determined, then providing an electronic decision form (160) based on the mismatch.

2. Method according to claim 1, wherein providing the electronic decision form (160) comprises:
automatically activating at least one action associated with said at least one target constraint.

3. Method according to claim 1 or 2, wherein determining comprises:
comparing the at least one actual data value with the at least one corresponding target constraint; and
based on said comparison, determining whether a threshold value for said target constraint is exceeded.

4. Method according to any one of the preceding claims, wherein providing the electronic decision form (160) comprises:
sending and displaying, through a user interface, the electronic decision form (160) to a receiver, wherein the electronic decision form (160) comprises a subset of the target constraints for which a mismatch is determined.

5. Method according to any one of the preceding claims, further comprising:
automatically inserting contract negotiation data into the at least one contract (110) such that the contract negotiation data are considered during annotation of the target constraints.

6. Method according to any one of the preceding claims, further comprising:
displaying and managing the target constraints in a graphical user interface (300; 400).

7. Method according to any one of the preceding claims, wherein the graphical user interface (300; 400) comprises one or more levels (310, 320; 410, 420, 430) of granularity for displaying the target constraints and access rights to the one or more levels (310, 320; 410, 420, 430) according to one or more user profiles.

8. Computer program product comprising computer readable instructions, which when loaded and run in a computer and/or computer network, causes the computer and/or the computer network to perform operations according to a method of any one of the preceding claims.

9. Computer system for connecting contract management (100) and claim management (200), the computer system including a contract and claim management system comprising:
an annotator operable to annotate target constraints, to be fulfilled by at least one contract (110), with machine-readable and/or machine-processible metadata;
a client operable to provide an electronic target constraint form (120) based on the annotated target constraints of the contract (110), and to receive at least one actual data value for at least one of the target constraints in the electronic target constraint form (120); and
a determiner operable to determine whether the at least one actual data value matches the at least one target constraint;
if a mismatch between the at least one actual data value and the at least one target constraint is determined, then provide an electronic decision form (160) based on the mismatch.

10. Computer system according to claim 9, wherein the contract and claim management system is further operable to:
automatically activate at least one action associated with said at least one target constraint.

11. Computer system according to claim 9 or 10, wherein the contract and claim management system is further operable to:
compare the at least one actual data value with the at least one corresponding target constraint; and
based on the comparison, determine whether a threshold value for said target constraint is exceeded.

12. Computer system according to any one of claims 9 to 11, wherein the contract and claim management system is further operable to:
send and display the electronic decision form (160) to a receiver, wherein the electronic decision form (160) comprises a subset of the target constraints for which a mismatch is determined.

13. Computer system according to any one of claims 9 to 12, wherein the contract and claim management system is further operable to:
automatically insert contract negotiation data into the at least one contract (110) such that the contract negotiation data are considered during annotation of the target constraints.

14. Computer system according to any one of claims 9 to 13, the computer system further comprising a graphical user interface (300; 400) operable to:
display and manage the target constraints.

15. Computer system according to any one of claims 9 to 14, wherein the graphical user interface (300, 400) comprises one or more levels of granularity (310, 320; 410, 420, 430) for displaying the target constraints and access rights to the one or more levels (310, 320; 410, 420, 430) according to one or more user profiles.

## Amended claims

### Amended claims in accordance with Rule 137(2) EPC.

**1.** Computer-implemented method for connecting contract management (100) and claim management (200), the method comprising:
annotating target constraints, to be fulfilled by at least one contract (110), with machine-readable and/or machine-processible metadata;
providing an electronic target form (120) based on the annotated target constraints of the contract (110);
receiving through an interface at least one actual data value corresponding to at least one of the target constraints in the electronic target constraint form (120);
determining, using a processor, whether the at least one actual data value matches the at least one target constraint; and
if a mismatch between the at least one actual data value and the at least one target constraint is determined, then providing an electronic decision form (160) based on the mismatch by sending and displaying, through a user interface, the electronic decision form (160) to a receiver, wherein the electronic decision form (160) comprises a subset of the target constraints for which a mismatch is determined.

**2.** Method according to claim 1, wherein providing the electronic decision form (160) comprises:
automatically activating at least one action associated with said at least one target constraint.

**3.** Method according to claim 1 or 2, wherein determining comprises:
comparing the at least one actual data value with the at least one corresponding target constraint; and
based on said comparison, determining whether a threshold value for said target constraint is exceeded.

**4.** Method according to any one of the preceding claims, further comprising:
automatically inserting contract negotiation data into the at least one contract (110) such that the contract negotiation data are considered during annotation of the target constraints.

**5.** Method according to any one of the preceding claims, further comprising:
displaying and managing the target constraints in a graphical user interface (300; 400).

**6.** Method according to any one of the preceding claims, wherein the graphical user interface (300; 400) comprises one or more levels (310, 320; 410, 420, 430) of granularity for displaying the target constraints and access rights to the one or more levels (310, 320; 410, 420, 430) according to one or more user profiles.

**7.** Computer program product comprising computer readable instructions, which when loaded and run in a computer and/or computer network, causes the computer and/or the computer network to perform operations according to a method of any one of the preceding claims.

**8.** Computer system for connecting contract management (100) and claim management (200), the computer system including a contract and claim management system comprising:
an annotator operable to annotate target constraints, to be fulfilled by at least one contract (110), with machine-readable and/or machine-processible metadata;
a client operable to provide an electronic target constraint form (120) based on the annotated target constraints of the contract (110), and to receive at least one actual data value for at least one of the target constraints in the electronic target constraint form (120); and
a determiner operable to determine whether the at least one actual data value matches the at least one target constraint;
if a mismatch between the at least one actual data value and the at least one target constraint is determined, then provide an electronic decision form (160) based on the mismatch by sending and displaying the electronic decision form (160) to a receiver, wherein the electronic decision form (160) comprises a subset of the target constraints for which a mismatch is determined.

**9.** Computer system according to claim 8, wherein the contract and claim management system is further operable to:
automatically activate at least one action associated with said at least one target constraint.

**10.** Computer system according to claim 8 or 9, wherein the contract and claim management system is further operable to:
compare the at least one actual data value with the at least one corresponding target constraint; and
based on the comparison, determine whether a threshold value for said target constraint is exceeded.

**11.** Computer system according to any one of claims 8 to 10, wherein the contract and claim management system is further operable to:
automatically insert contract negotiation data into the at least one contract (110) such that the contract negotiation data are considered during annotation of the target constraints.

**12.** Computer system according to any one of claims 8 to 11, the computer system further comprising a graphical user interface (300; 400) operable to:
display and manage the target constraints.

**13.** Computer system according to any one of claims 8 to 12, wherein the graphical user interface (300, 400) comprises one or more levels of granularity (310, 320; 410, 420, 430) for displaying the target constraints and access rights to the one or more levels (310, 320; 410, 420, 430) according to one or more user profiles.
